# EUROPEAN PATENT APPLICATION

(11) **EP 4 270 924 A1**
(43) Date of publication of application: **01.11.2023**
(21) Application number: 21911542.5
(22) Date of filing: 22.12.2021
(51) Int. Cl.: H04N 5/232, H04N 5/225

(54) **CAMERA ACTUATOR AND CAMERA MODULE COMPRISING SAME**

(30) Priority: 22.12.2020 KR 20200180860
(71) Applicant: LG Innotek Co., Ltd., Seoul 07796 (KR)
(72) Inventor: LEE, Seung Hak, Seoul 07796 (KR)
(74) Representative: DREISS Patentanwälte PartG mbB
(86) International application number: PCT/KR2021/019641
(87) International publication number: WO 2022/139476

(57) **Abstract**

A camera actuator disclosed to an embodiment includes a first housing, a prism unit disposed in the first housing, and a first driving portion tilting the prism unit in a first axis or a second axis, the first driving portion include a first magnet disposed on a region corresponding to a first outer surface of the prism unit; a second magnet disposed on a region corresponding to a second outer surface opposite to the first outer surface of the prism unit; and a third magnet disposed on a region corresponding to a third outer surface disposed between the first and second outer surfaces of the prism unit, the first and second magnets are spaced apart in a first direction, a length of the third magnet in the first direction may be 50% to 98% of a distance between the first and second magnets in the first direction.

## Description

### [Technical Field]

The embodiment relates to a camera actuator and a camera module comprising the same.

### [Background Art]

The camera module performs a function of capturing a subject and storing it as an image or video, and is installed in various devices such as mobile terminals such as mobile phones, laptops, drones, and vehicles. In general, the above-described device is equipped with a micro camera module, and the camera module may perform an autofocus (AF) function of aligning the focal length of a lens by automatically adjusting a distance between an image sensor and a lens. In addition, the camera module may perform a zooming function of zooming up or zooming out by increasing or decreasing the magnification of a long-distance subject through a zoom lens.

Meanwhile, a zoom actuator is used for a zooming function in a camera module. However, frictional torque is generated when the lens moves due to the mechanical movement of the actuator, and problems such as reduction in driving force, increase in power consumption, and deterioration in control characteristics occur due to this frictional torque. In order to derive the best optical characteristics using a plurality of zoom lens groups in the camera module, alignment between the plurality of lens groups and alignment between the plurality of lens groups and the image sensor should fit well. However, decentering in which the spherical center of the lens group deviate from the optical axis, or tilt, which is a lens tilt phenomenon and when the central axis of the lens group and the image sensor are not aligned, the angle of view changes or out of focus occurs, resulting in deterioration in image quality and resolution. In the case of increasing the separation distance in the region where friction occurs to reduce the friction torque resistance when moving the lens for the zoom function in the camera module, there is a technical problem in that lens descent or lens tilt intensifies during zoom movement or reversal of the zoom movement.

Recently, camera modules have applied image stabilization (IS) technology to correct or prevent image stabilization caused by camera movement caused by an unstable fixing device or a user's movement. Such image stabilization (IS) technology includes an optical image stabilizer (OIS) technology and an image stabilizer technology using an image sensor. Here, OIS technology is a technology that corrects motion by changing the path of light, and image stabilization technology using an image sensor is a technology that corrects motion in a mechanical and electronic way. Recently, OIS technology is being adopted more.

The camera module may include a reflective member and a driving portion capable of changing a path of light to implement the OIS function. In detail, the camera module may change the path of light by controlling the position of the reflective member with a driving force applied from the driving portion. As such a driving portion, the position of the reflective member may be controlled by using a driving portion of a voice coil motor (VCM) type including a coil, a magnet, and the like. However, in the case of the above method, there is a problem in that the magnets cause mutual interference. For example, when a plurality of camera modules including the VCM-type driver are disposed adjacent to each other, interference occurs between magnets of the camera modules disposed adjacent to each other, resulting in a decrease in positional accuracy of the reflective member. In order to prevent this, there is a method of minimizing the mutual interference force by reducing the size of the magnets included in the camera modules adjacent to each other, but in this case, there is a problem in that the electromagnetic force decreases and the power consumption increases. In addition, the optical characteristics of the camera module may be degraded, and the effect of the OIS operation may be insignificant. Therefore, a new structure capable of solving the above problems is required.

### [Disclosure]

### [Technical Problem]

An embodiment provides a camera actuator and camera module that may have improved optical properties. An embodiment provides a camera actuator and a camera module capable of minimizing leakage magnetic flux. An embodiment provides a camera actuator and a camera module capable of effectively controlling vibration caused by hand shaking. An embodiment provides a camera actuator and a camera module that can be implemented in a small size having a small volume. An embodiment provides a camera actuator and camera module having improved autofocus and high magnification zoom functions. An embodiment provides a camera actuator and a camera module capable of preventing problems such as decentering, tilting, friction, and the like, which occur when moving a lens group.

### [Technical Solution]

A camera actuator according to an embodiment comprises a first housing, a prism unit disposed in the first housing, and a first driving portion tilting the prism unit in a first axis or a second axis, wherein the first driving portion includes a first magnet disposed on a region corresponding to a first outer surface of the prism unit; a second magnet disposed on a region corresponding to a second outer surface opposite to the first outer surface of the prism unit; and a third magnet disposed on a region corresponding to a third outer surface disposed between the first and second outer surfaces of the prism unit, wherein the first and second magnets are spaced apart in a first direction, wherein a length of the third magnet in the first direction may be in a range of 50% to 98% of a distance between the first and second magnets in the first direction.

According to an embodiment of the invention, the first to third magnets may extend in a second direction perpendicular to the first direction, and lengths of the first and second magnets in the second direction may be the same. When viewed from top, the third magnet overlaps the first and second magnets in the first direction, a length of the third magnet overlapping the first and second magnets in the second direction may be in a range of 50% to 98% of a total length of the third magnet in the second direction. Lengths of the third magnet in the second direction may be equal to lengths of the first and second magnets in the second direction. A length of the third magnet in the first direction may be longer than the length of the third magnet in the second direction.

According to an embodiment of the invention, the embodiment may include a first housing holder disposed on one side of the first housing and a moving plate disposed between the prism unit and the first housing holder, the moving plate includes a plurality of first moving portions disposed on one surface facing the prism unit and a plurality of second moving portions disposed on the other surface opposite to the one surface and facing the first housing holder. The first and second moving portions may protrude from one surface and the other surface, respectively. the plurality of first moving portions may be spaced apart in the first direction, and the plurality of second moving portions may be spaced apart in a third direction perpendicular to the first direction.

According to an embodiment of the invention, the prism unit includes a fifth outer surface disposed between the first and second outer surfaces and facing the moving plate, and the fifth outer surface may include a plurality of recesses disposed on regions corresponding to the plurality of first moving portions. The plurality of first moving portions may have the same shape, and the plurality of recesses may have different cross-sectional shapes. The prism unit is provided to be tilted in the third direction with an imaginary straight line extending in the first direction as a rotation axis, and the first moving portion may guide the prism unit when the prism unit tilts in the third direction.

According to an embodiment of the invention, the prism unit is provided to be tilted in the first direction with an imaginary straight line extending in the third direction as a rotation axis, and the second moving portion may guide the prism unit when the prism unit tilts in the first direction.

A camera actuator according to an embodiment comprises a first housing, a prism unit disposed in the first housing, and a first driving portion tilting the prism unit in a first axis or a second axis, the first driving portion includes a first magnet disposed on a region corresponding to a first outer surface of the prism unit, a second magnet disposed on a region corresponding to a second outer surface opposite to the first outer surface of the prism unit, and a third magnet disposed on a region corresponding to a third outer surface disposed between the first and second outer surfaces of the prism unit, the prism unit includes a fifth outer surface disposed between the first and second outer surfaces and connected to the third outer surface, the first and second magnets are spaced apart in a first direction, and centers of the first and second magnets based on the first direction are disposed on a same line, a center of the third magnet based on a second direction perpendicular to the first direction may be disposed closer to the fifth outer surface than an imaginary straight line connecting the centers of the first and second magnets.

According to an embodiment of the invention, one end of the third magnet may be disposed closer to the fifth outer surface than one end of the first and second magnets in the second direction. A length of the third magnet in the first direction may be in a range of 50% to 98% of a distance between the first and second magnets in the first direction.

The camera module according to the embodiment comprises a first camera actuator and a second camera actuator, the first camera actuator provides an optical image stabilizer (OIS) function, and the second camera actuator zooms or autofocus or function, and the first camera actuator may include the above-described camera actuator.

According to an embodiment of the invention, light incident on the camera module from the outside may be incident on the second camera actuator through the first camera actuator.

### [Advantageous Effects]

The camera actuator and camera module according to the embodiment may have improved optical characteristics. In detail, the camera actuator and camera module according to the embodiment include a driving portion for controlling the position of the prism, and the position of the prism can be precisely controlled by the driving portion. Accordingly, the embodiment can provide an improved OIS function by effectively controlling vibration caused by hand shaking.

The camera actuator and camera module according to the embodiment may minimize or prevent magnetic flux leakage. In detail, the driving portion for controlling the prism unit may include a plurality of magnets, and the plurality of magnets may have a set size and be disposed at a set position. Accordingly, even if another actuator or another camera module is disposed side by side in a position adjacent to the camera actuator and the camera module including the same, magnetic interference by the other actuator or the other camera module can be minimized. Therefore, the embodiment may accurately control the prism unit using the driving portion and effectively control vibration caused by hand shaking. The camera actuator and camera module according to the embodiment may prevent or minimize lens decentering or tilting during zooming. Accordingly, the embodiment can improve align characteristics between a plurality of lens groups, thereby preventing a change in angle of view or occurrence of out-of-focus, and thus, improved image quality and resolution.

### [Description of Drawings]

FIG. 1 is a perspective view of a camera module according to an embodiment.
FIG. 2 is a perspective view in which some components of the camera module of FIG. 1 are omitted.
FIG. 3 is a perspective view of a first camera actuator included in a camera module according to an embodiment.
FIG. 4 is an exploded perspective view of a first camera actuator according to an embodiment.
FIG. 5 is a perspective view of a driving portion of a first camera actuator according to an embodiment.
FIG. 6 is a perspective view of a first housing of a first camera actuator according to an embodiment.
FIGS. 7 and 8 are views of arrangement relationships among a prism unit, a moving plate, and a housing holder of a first camera actuator according to an embodiment.
FIGS. 9 and 10 are perspective views of a prism mover of a first camera actuator according to an embodiment.
FIGS. 11 and 12 are diagrams of a disposition relationship of magnets of a first camera actuator according to an embodiment.
FIG. 13 is a cross-sectional view taken along line A-A' of FIG. 3.
FIG. 14 is a cross-sectional view taken along line B-B' of FIG. 3.
FIGS. 15 and 16 are simulation data for magnetic force distribution of a magnet in a first camera actuator according to an embodiment and a comparative example.
FIG. 17 is a perspective view of a second camera actuator included in a camera module according to an embodiment.
FIG. 18 is a perspective view of a second camera actuator according to an embodiment in which some components are omitted.
FIG. 19 is an exploded perspective view in which some components of the second camera actuator according to the embodiment are omitted.
FIG. 20 is a perspective view of a first guide portion and a second guide portion in a second camera actuator according to an embodiment.
FIGS. 21 and 22 are additional perspective views of the first guide portion shown in FIG. 20.
FIG. 23 is a perspective view of a first driving portion in a second camera actuator according to an embodiment.
FIG. 24 is an exemplary view of driving in a second camera actuator according to an embodiment.
FIG. 25 is a cross-sectional view showing a section C-C' in FIG. 17.
FIGS. 26 and 27 are enlarged views illustrating an enlarged region S of FIG. 25.
FIG. 28 is magnetic flux data according to a separation distance between a magnet and a position detection sensor in a second camera actuator according to an embodiment and a comparative example.
FIGS. 29 and 30 are magnetic flux density distribution data of a second camera actuator according to Comparative Examples and Examples.
FIG. 31 is an exemplary view of an integrated body in a camera module according to another embodiment.
FIG. 32 is a perspective view of a mobile terminal to which a camera module according to an embodiment is applied.
FIG. 33 is a perspective view of a vehicle to which a camera module according to an embodiment is applied.

### [Best Mode]

Hereinafter, preferred embodiments of the invention will be described in detail with reference to the accompanying drawings. A technical spirit of the invention is not limited to some embodiments to be described, and may be implemented in various other forms, and one or more of the components may be selectively combined and substituted for use within the scope of the technical spirit of the invention. In addition, the terms (including technical and scientific terms) used in the embodiments of the invention, unless specifically defined and described explicitly, may be interpreted in a meaning that may be generally understood by those having ordinary skill in the art to which the invention pertains, and terms that are commonly used such as terms defined in a dictionary should be able to interpret their meanings in consideration of the contextual meaning of the relevant technology. Further, the terms used in the embodiments of the invention are for explaining the embodiments and are not intended to limit the invention. In this specification, the singular forms also may include plural forms unless otherwise specifically stated in a phrase, and in the case in which at least one (or one or more) of A and (and) B, C is stated, it may include one or more of all combinations that may be combined with A, B, and C.

In describing the components of the embodiments of the invention, terms such as first, second, A, B, (a), and (b) may be used. Such terms are only for distinguishing the component from other component, and may not be determined by the term by the nature, sequence or procedure etc. of the corresponding constituent element. And when it is described that a component is "connected ", "coupled" or "joined" to another component, the description may include not only being directly connected, coupled or joined to the other component but also being "connected ", "coupled" or "joined" by another component between the component and the other component. In addition, in the case of being described as being formed or disposed "above (on)" or "below (under)" of each component, the description includes not only when two components are in diarect contact with each other, but also when one or more other components are formed or disposed between the two components. In addition, when expressed as "above (on)" or "below (under)", it may refer to a downward direction as well as an upward direction with respect to one element.

Prior to the description of the embodiment of the invention, the first direction may mean the x-axis direction shown in the drawing, and the second direction may be a direction different from the first direction. For example, the second direction may mean a y-axis direction shown in the drawing as a direction perpendicular to the first direction. Also, the horizontal direction may mean first and second directions, and the vertical direction may mean a direction perpendicular to at least one of the first and second directions. For example, the horizontal direction may refer to the x-axis and y-axis directions of the drawing, and the vertical direction may refer to the z-axis direction of the drawing, perpendicular to the x-axis and y-axis directions. In addition, in the x-axis, y-axis, and z-axis directions shown in the figure, the y-axis direction may mean an optical axis direction or a direction parallel thereto, and the xy plane represents the ground, and the x-axis represents the y-axis in the ground It may mean a direction perpendicular to and the z-axis may mean a direction perpendicular to the ground.

### <Camera module 10>

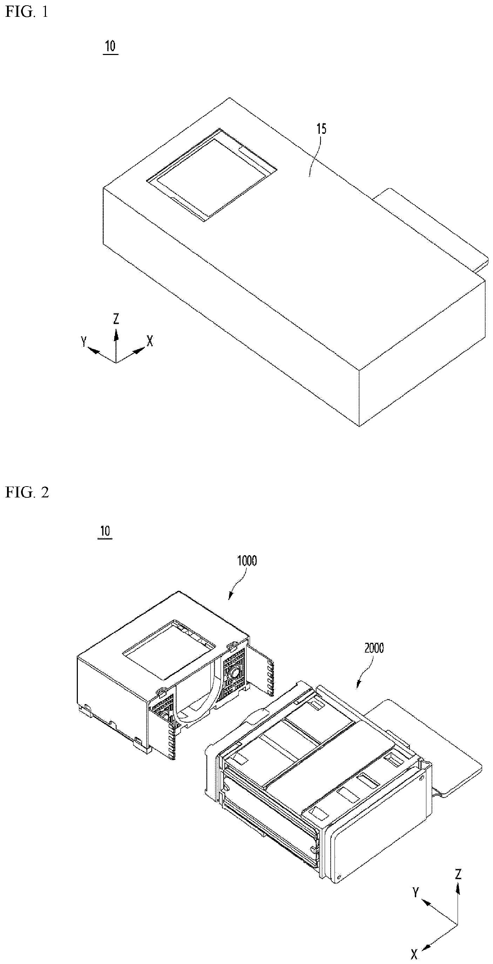

FIG. 1 is a perspective view of a camera module according to an embodiment, and FIG. 2 is a perspective view of the camera module of FIG. 1 in which some components are omitted.

Referring to FIGS. 1 and 2, the camera module 10 according to the embodiment may include one or a plurality of camera actuators. For example, the camera module 10 may include a first camera actuator 1000 and a second camera actuator 2000. The camera module 10 may include a protective case 15 accommodating the first camera actuator 1000 and the second camera actuator 2000.

The first camera actuator 1000 may be an optical image stabilizer (OIS) actuator. In this case, light incident on the camera module 10 from the outside may first be incident on the first camera actuator 1000. In addition, the path of the light incident on the first camera actuator 1000 may be changed to be incident on the second camera actuator 2000. Subsequently, the light passing through the second camera actuator 2000 may be incident on the image sensor 2180. The second camera actuator 2000 may be a zoom and/or autofocus actuator. The second camera actuator 2000 may include a plurality of lenses. The second camera actuator 2000 may perform a zoom or autofocus function by moving at least one lens in an optical axis direction according to a control signal from a controller.

### <First camera actuator 1000>

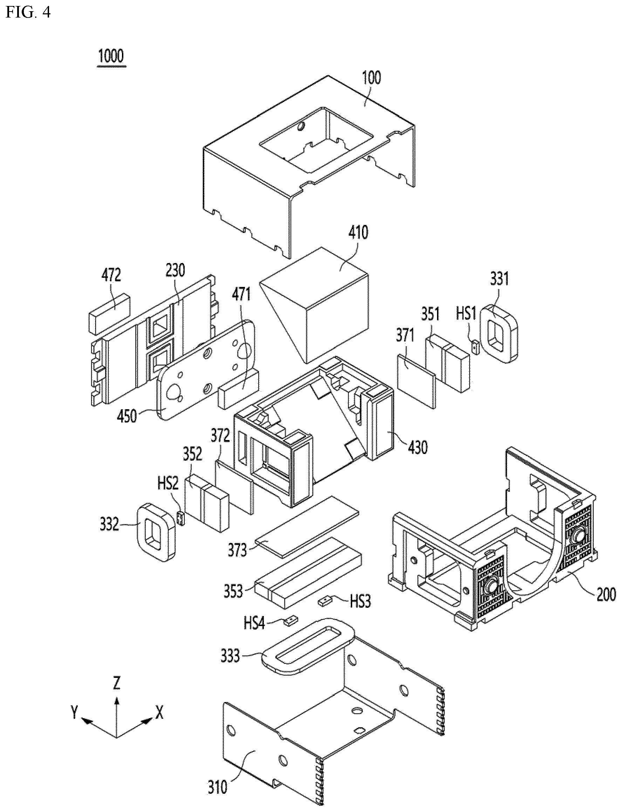

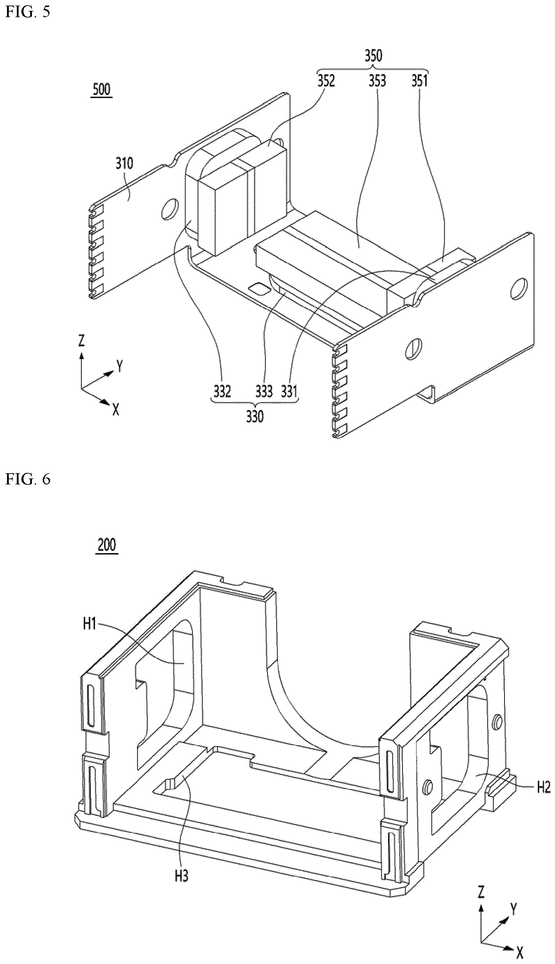

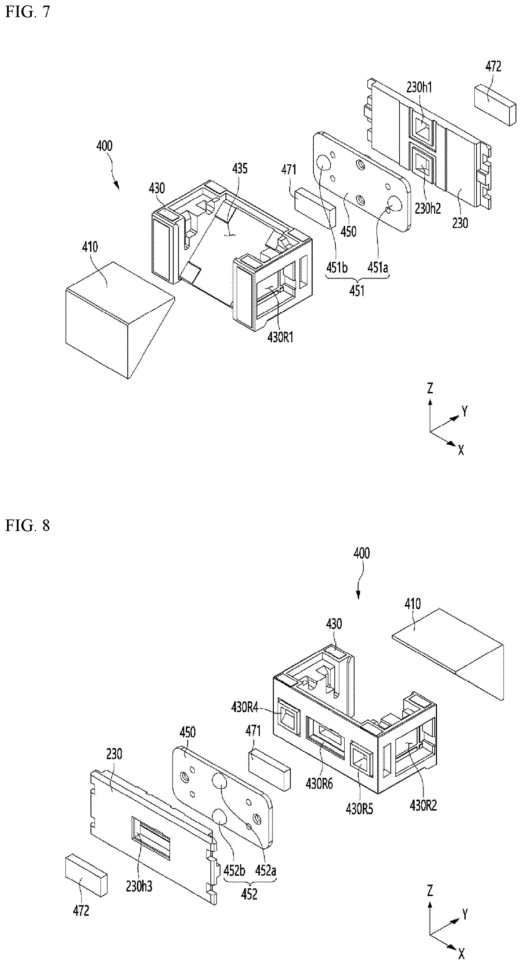

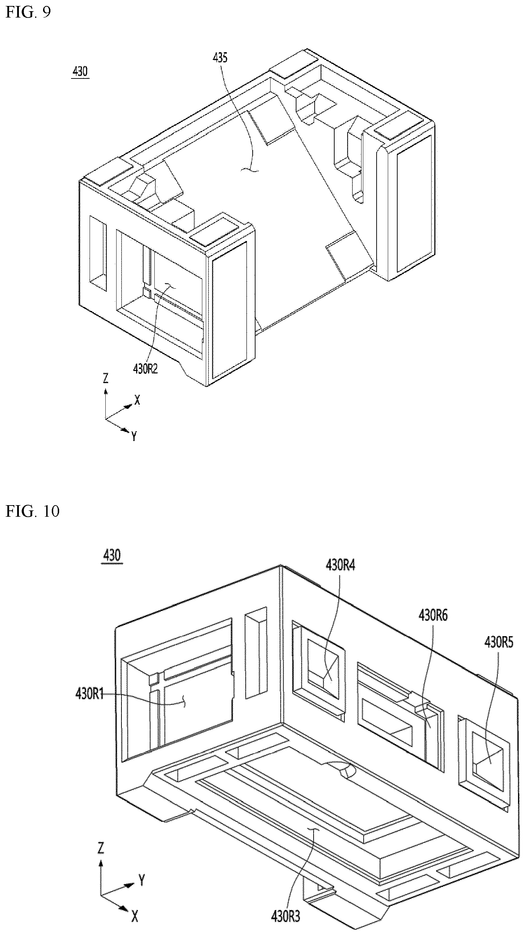

FIG. 4 is an exploded perspective view of a first camera actuator according to an embodiment, and FIG. 5 is a perspective view of a driving portion of the first camera actuator according to an embodiment. FIG. 6 is a perspective view of a first housing of a first camera actuator according to an embodiment, and FIGS. 7 and 8 are diagrams for a disposition relationship between a prism unit, a moving plate, and a housing holder of the first camera actuator according to an embodiment. FIGS. 9 and 10 are perspective views of the prism mover of the first camera actuator according to the embodiment.

The first camera actuator 1000 according to the embodiment will be described in more detail with reference to FIGS. 4 to 10.

The first camera actuator 1000 may be an optical image stabilizer (OIS) actuator. The first camera actuator 1000 may change a path of light incident on the camera module 10. Referring to FIG. 4, the first camera actuator 1000 may include a cover member 100, a first housing 200, a first driving portion 300, a prism unit 400, a first housing holder 230 and a moving plate 450. The cover member 100 includes a receiving space therein, and at least one side surface thereof may be open. For example, the cover member 100 may have a structure in which an upper surface and one side surface are open. In detail, the cover member 100 may have a structure in which an upper surface on which light is incident from the outside and one side corresponding to the first camera actuator 1000 are open. The cover member 100 may provide a light movement path to the prism unit 400. In addition, the cover member 100 may have a shape in which a lower surface opposite to the upper surface is further opened. The cover member 100 may include a rigid material. For example, the cover member 100 may include a material having predetermined reliability, such as resin, metal, or ceramic, and may support the first housing 200 disposed in the receiving space. For example, the cover member 100 may support components such as the first housing 200, the prism unit 400, and the first driving portion 300.

The first driving portion 300 may include a first circuit board 310, a coil portion 330 and a magnet 350. The first circuit board 310 may be connected to a power supply unit (not shown) to apply power to the coil portion 330. The first circuit board 310 may include such as a rigid printed circuit board (Rigid PCB), a flexible PCB, and a rigid flexible PCB on which a wiring pattern that can be electrically connected. The coil portion 330 may be electrically connected to the first circuit board 310. The coil portion 330 may include one or a plurality of coil portions. For example, the coil portion 330 may include a first coil portion 331, a second coil portion 332, and a third coil portion 333. The first coil portion 331, the second coil portion 332, and the third coil portion 333 may be spaced apart from each other. For example, the first circuit board 310 may have a 'C' shape, and the first coil portion 331 and the first coil portion 331 and the second coil portion332 may be respectively disposed on the first and second surface of the first circuit board 310 facing each other in the first direction. Also, the third coil portion 333 may be disposed on a third surface connecting the first and second surfaces of the first circuit board 310. The magnet 350 may include one or a plurality of magnets. For example, the magnet 350 may include a first magnet 351, a second magnet 352, and a third magnet 353 disposed on a region corresponding to the coil portion 330.

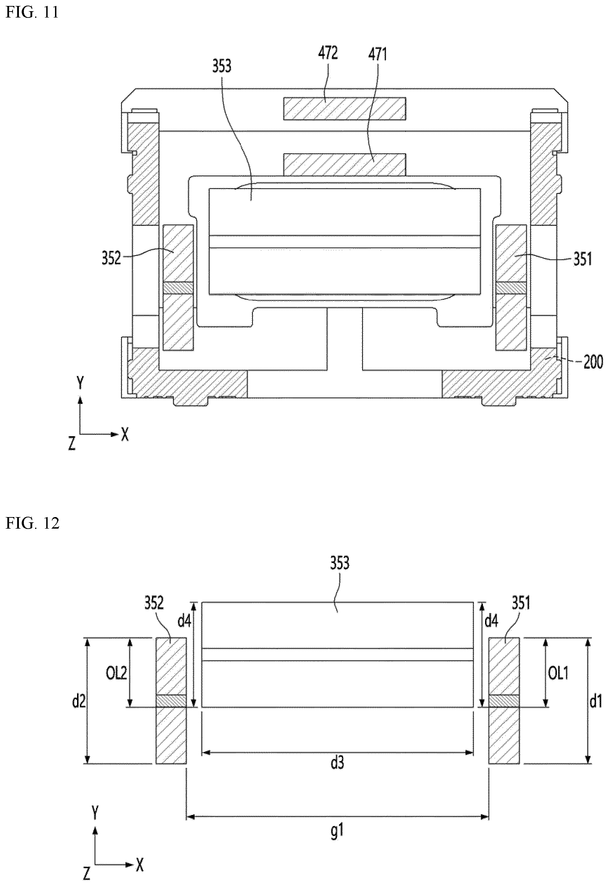

In detail, the first magnet 351 may be disposed on the first surface of the first circuit board 310. The first magnet 351 may be disposed on a region corresponding to the first coil portion 331. The first magnet 351 may be disposed on a region corresponding to a first outer surface of the prism unit 400 to be described later. Also, the second magnet 352 may be disposed on the second surface of the first circuit board 310. The second magnet 352 may be disposed on a region corresponding to the second coil portion 332. The second magnet 352 may be disposed on a region corresponding to the second outer surface of the prism unit 400. Also, the third magnet 353 may be disposed on the third surface of the first circuit board 310. The third magnet 353 may be disposed on a region corresponding to the third coil portion 333. The third magnet 353 may be disposed on a region corresponding to the third outer surface of the prism unit 400. A description of the first to third magnets 351, 352, and 353 will be described in detail with reference to FIGS. 11 and 12 to be described later.

The first driving portion 300 may further include a yoke portion 370. The yoke portion 370 may include one or a plurality of yokes. For example, the yoke portion 370 may include a first yoke 371, a second yoke 372, and a third yoke 373 disposed on regions corresponding to the coil portion 330 and the magnet 350. The first to third yokes 371, 372, and 373 may provide a magnetic flux shielding function for the magnet 350 disposed in corresponding regions, respectively. In detail, the first yoke 371 may be disposed on a region corresponding to the first coil portion 331 and the first magnet 351. The first magnet 351 may be disposed between the first yoke 371 and the first coil portion 331. Also, the second yoke 372 may be disposed on a region corresponding to the second coil portion 332 and the second magnet 352. The second magnet 352 may be disposed between the second yoke 372 and the second coil portion 332. Also, the third yoke 373 may be disposed on a region corresponding to the third coil portion 333 and the third magnet 353. The third magnet 353 may be disposed between the third yoke 373 and the third coil portion 333.

The first driving portion 300 may further include a sensing portion. The sensing portion may include a position detection sensor capable of detecting a position. The sensing portion may include at least one hall sensor, a gyro sensor, and the like. For example, the sensing portion may include a first hall sensor HS1 disposed adjacent to the first coil portion 331 and a second hall sensor HS2 disposed adjacent to the second coil portion 332. Each of the first hall sensor HS1 and the second hall sensor HS2 may detect positions of the first magnet 351 and the second magnet 352. Also, the sensing portion may include a third hall sensor HS3 and a fourth hall sensor HS4 disposed adjacent to the third coil portion 333. The third hall sensor HS3 and the fourth hall sensor HS4 may detect the position of the third magnet 353. The first driving portion 300 may tilt the prism unit 400. In detail, the first driving portion 300 may control the tilting of the prism unit 400 in a first axis or a second axis by applied power.

Referring to FIG. 6, the first housing 200 may include a receiving space to accommodate the prism unit 400. The first housing 200 may include a plurality of inner surfaces. For example, the first housing 200 may include a first inner surface corresponding to the first surface of the first circuit board 310 and a second inner surface corresponding to the second surface of the first circuit board 310. In addition, the first housing 200 may include a side surface and a third inner surface corresponding to the third surface of the first circuit board 310. In detail, the first housing 200 may include a first inner surface corresponding to the first coil portion 331 and a second inner surface corresponding to the second coil portion 332. The first inner surface and the second inner surface may face each other in the first direction (x-axis direction).

The first housing 200 may further include a third inner surface, a fourth inner surface, and a fifth inner surface. The third inner surface may be disposed on a region corresponding to the third coil portion 333. The third inner surface may be disposed between the first and second inner surfaces to connect the two inner surfaces. The third inner surface may have a shape extending in the first direction (x-axis direction). The fourth inner surface may be disposed between the first and second inner surfaces. The fourth inner surface may face the second camera actuator 2000. The fourth inner surface may include an opening formed on a region corresponding to the prism 410. Also, the fifth inner surface may be disposed between the first and second inner surfaces. The fifth inner surface may be a surface facing the fourth inner surface in the second direction (y-axis direction). The fifth inner surface may be open, and a first housing holder 230 to be described later may be disposed on the open region. The first housing 200 may include a plurality of housing holes. The housing hole may be a hole penetrating the outer and inner surfaces of the first housing 200. The plurality of housing holes may include a first housing hole H1, a second housing hole H2, and a third housing hole H3.

The first housing hole H1 may be a through hole passing through an outer surface corresponding to the first inner surface. The first housing hole H1 may be disposed on a region corresponding to the first coil portion 331. Also, the first housing hole H1 may have a size and shape corresponding to that of the first coil portion 331. Accordingly, the first coil portion 331 may be partially or entirely inserted into the first housing hole H1 and disposed. The second housing hole H2 may be a through hole passing through an outer surface corresponding to the second inner surface. The first housing hole H1 may be disposed on a region corresponding to the first housing hole H1 in the first direction. The second housing hole H2 may be disposed on a region corresponding to the second coil portion 332. Also, the second housing hole H2 may have a size and shape corresponding to that of the second coil portion 332. Accordingly, the second coil portion 332 may be partially or entirely inserted into the second housing hole H2 and disposed. The first housing hole H1 may have the same size and shape as the second housing hole H2. The third housing hole H3 may be a through hole passing through an outer surface corresponding to the third inner surface. The third housing hole H3 may be disposed on a region corresponding to the third coil portion 333. Also, the third housing hole H3 may have a size and shape corresponding to that of the third coil portion 333. Accordingly, the third coil portion 333 may be partially or entirely inserted into the third housing hole H3 and disposed. The third housing hole H3 may have a size and shape different from those of the first housing hole H1 and the second housing hole H2. For example, the size of the third housing hole H3 may be larger than the sizes of the first housing hole H1 and the second housing hole H2.

Referring to FIGS. 7 to 10, the prism unit 400 may be disposed within the first housing 200. In detail, the prism unit 400 may be disposed within the receiving space of the first housing 200. The prism unit 400 may include a prism 410 and a prism mover 430 supporting the prism 410. The prism 410 may be a right-angle prism. The prism 410 may reflect the direction of light incident from the outside. For example, the prism 410 may change a path of light incident to the first camera actuator 1000 from the outside toward the first camera actuator 1000.

The prism mover 430 may support the prism 410. The prism 410 may be disposed on the prism mover 430. The prism mover 430 may be disposed surrounding the prism 410. At least one side of the prism mover 430 may be open and may include a receiving space therein. For example, the prism mover 430 may have a structure in which a plurality of external surfaces connected to each other are open. In detail, the prism mover 430 may have a structure in which an outer surface corresponding to the prism 410 is open, and may include a receiving space defined as a first space 435 therein. The first space 435 may have a shape corresponding to that of the prism 410. The prism 410 may be disposed and fixed in the first space 435 of the prism mover 430.

The prism unit 400 may include a plurality of outer surfaces. In detail, the prism mover 430 may include a plurality of outer surfaces. For example, the prism mover 430 may include a first outer surface corresponding to the first inner surface of the first housing 200 and a second outer surface corresponding to the second inner surface. In addition, the prism mover 430 may include a third outer surface corresponding to the third inner surface of the first housing 200. The third outer surface may be a surface connecting the two outer surfaces between the first and second outer surfaces. The third outer surface may be a bottom surface of the prism mover 430. In addition, the prism mover 430 may include a fifth outer surface corresponding to the fifth inner surface. The fifth outer surface may be a surface connecting the two outer surfaces between the first and second outer surfaces, or may be a surface connected to the third outer surface. The prism mover 430 may include a plurality of recesses. Each of the plurality of recesses may have a concave shape on an outer surface of the prism mover 430 toward the center of the prism mover 430.

The plurality of recesses may include a first recess 430R1, a second recess 430R2, and a third recess 430R3. The first recess 430R1 may be disposed on the first outer surface. The first recess 430R1 may be disposed on a region corresponding to the first housing hole H1. Also, the second recess 430R2 may be disposed on the second outer surface. The second recess 430R2 may be disposed on a region corresponding to the second housing hole H2. The second recess 430R2 may be disposed to face the first recess 430R1 in the first direction (x-axis direction). Also, the third recess 430R3 may be disposed on the third outer surface. The third recess 430R3 may be disposed on a region corresponding to the third housing hole H3. The magnet 350 and the yoke portion 370 may be disposed in the first to third recesses 430R1, 430R2, and 430R3. For example, the first magnet 351 and the first yoke 371 may be disposed in the first recess 430R1, the second magnet 352 and the second yoke 372 may be disposed in the second recess 430R1, the third magnet 353 and the third yoke 373 may be disposed in the third recess 430R3 so that the magnets 350 may be spaced apart from each other. In addition, the plurality of recesses may further include a fourth recess 430R4, a fifth recess 430R5, and a sixth recess 430R6. The fourth recess 430R4, the fifth recess 430R5, and the sixth recess 430R6 may be disposed on a fifth outer surface of the prism mover 430. The fourth recess 430R4 and the fifth recess 430R5 may be spaced apart from each other in the first direction (x-axis direction). The fourth recess 430R4 and the fifth recess 430R5 may be disposed on regions corresponding to the first moving portion 451 of the moving plate 450 to be described later. The fourth recess 430R4 and the fifth recess 430R5 may provide a space into which part or all of the first moving portion 451 is inserted. The fourth recess 430R4 and the fifth recess 430R5 may have the same or different shapes. For example, the fourth recess 430R4 and the fifth recess 430R5 may have different cross-sectional shapes. Accordingly, the fourth recess 430R4 and the fifth recess 430R5 may provide a stopper function during tilt driving by the first moving portion 451. The sixth recess 430R6 may be disposed between the fourth recess 430R4 and the fifth recess 430R5. A fourth magnet 471 may be disposed in the sixth recess 430R6.

The first housing holder 230 may be disposed on one side of the first housing 200. In detail, the first housing holder 230 may be disposed on the fifth inner surface of the first housing 200. The first housing holder 230 may be connected to the first housing 200 and cover a fifth inner surface of the opened first housing 200. The first housing holder 230 may include at least one groove. For example, the first housing holder 230 may include a first groove 230h1 and a second groove 230h2 formed on one surface facing the prism mover 430. The first groove 230h1 and the second groove 230h2 may have a concave shape from one surface of the first housing holder 230 toward the other surface opposite to the one surface. The first groove 230h1 and the second groove 230h2 may be spaced apart from each other in a third direction (Z-axis direction). The first groove 230h1 and the second groove 230h2 may be disposed on a region corresponding to a second moving portion 452 to be described later. The first groove 230h1 and the second groove 230h2 may provide a space into which part or all of the second moving portion 452 is inserted. The first groove 230h1 and the second groove 230h2 may have the same or different shapes. For example, the first groove 230h1 and the second groove 230h2 may have different cross-sectional shapes. Accordingly, the first groove 230h1 and the second groove 230h2 may provide a stopper function during tilt driving by the second moving portion 452.

The first housing holder 230 may further include a third groove 230h3. The third groove 230h3 may be formed on the other surface of the first housing holder 230. The third groove 230h3 may have a concave shape from the other surface of the first housing holder 230 toward one surface. The third groove 230h3 may be disposed on a region corresponding to the sixth recess 430R6 of the prism unit 400. In detail, the third groove 230h3 may be disposed on a region overlapping the sixth recess 430R6 in the second direction (y-axis direction). A fifth magnet 472 may be disposed in the third groove 230h3. The fifth magnet 472 is disposed on a region corresponding to the fourth magnet 471, and an attractive force may be formed between the two magnets. Accordingly, the prism unit 400 may be disposed at a position set by the attraction of the fourth magnet 471 and the fifth magnet 472.

The moving plate 450 may be disposed between the prism unit 400 and the first housing holder 230. The moving plate 450 may face the fifth outer surface. The moving plate 450 may include a first moving portion 451 and a second moving portion 452 protruding from the surface. The first moving portion 451 may be disposed on one surface of the moving plate 450 facing the prism unit 400. The first moving portion 451 may include a 1-1 moving portion 451a and a 1-2 moving portion 451b that are spaced apart in the first direction (x-axis direction) and have the same shape. The 1-1 moving portion 451a may be disposed on a region corresponding to the fourth recess 430R4 of the prism mover 430. The 1-1 moving portion 451a may overlap the fourth recess 430R4 in the second direction (y-axis direction). In addition, the 1-2 moving portion 451b may be disposed on a region corresponding to the fifth recess 430R5 of the prism mover 430. The 1-2 moving portion 451b may overlap the fifth recess 430R5 in the second direction (y-axis direction). The first moving portion 451 may provide a function of guiding the tilt of the prism unit 400 when the prism unit 400 is tilted. In detail, the prism unit 400 may tilt the first direction (x-axis direction) into a third direction (z-axis direction, vertical direction) as a rotation axis. In this case, the first moving portion 451 may guide the prism unit 400 to tilt in the third direction at a set angle.

The second moving portion 452 may be disposed on the other surface of the moving plate 450 opposite to one surface of the moving plate 450 and facing the first housing holder 230. The second moving portion 452 may include a 2-1 moving portion 452a and a 2-2 moving portion 452b that are spaced apart in a third direction (z-axis direction) and have the same shape. The 2-1 moving portion 452a and the 2-2 moving portion 452b may be located on a region corresponding to the region between the 1-1 moving portion 451a and the 1-2 moving portion 451b. The 2-1 moving portion 452a may be disposed on a region corresponding to the first groove 230h1 of the first housing holder 230. The 2-1 moving portion 452a may overlap the first groove 230h1 in the second direction (y-axis direction). Also, the 2-2 moving portion 452b may be disposed on a region corresponding to the second groove 230h2 of the first housing holder 230. The 2-2 moving portion 452b may overlap the second groove 230h2 in the second direction (y-axis direction). The second moving portion 452 may provide a function of guiding the tilt of the prism unit 400 when the prism unit 400 is tilted. In detail, the prism unit 400 may tilt in the first direction (x-axis direction, left-right direction) with the third direction (z-axis direction) as a rotation axis. In this case, the second moving portion 452 may guide the prism unit 400 to tilt in the first direction at a set angle.

FIGS. 11 and 12 are diagrams of a disposition relationship of magnets of a first camera actuator according to an embodiment. The magnet 350 according to the embodiment may have a set size and be disposed at a set position.

Referring to FIGS. 11 and 12, the magnet 350 may include a first magnet 351, a second magnet 352 and a third magnet 353. The first magnet 351 may be disposed on a first outer surface of the prism unit 400. The first magnet 351 may be disposed in the first recess 430R1 of the prism unit 400. The first magnet 351 may have a size and shape corresponding to that of the first recess 430R1. For example, the first magnet 351 may have the same shape as the first recess 430R1. Also, the first magnet 351 may have a size equal to or smaller than that of the first recess 430R1. Accordingly, the first magnet 351 may be inserted into and fixed to the first recess 430R1 and disposed at a set position. The second magnet 352 may be disposed on a second outer surface of the prism unit 400. The second magnet 352 may be disposed in the second recess 430R2 of the prism unit 400. The second magnet 352 may have a size and shape corresponding to that of the second recess 430R2. For example, the second magnet 352 may have the same shape as the second recess 430R2. Also, the second magnet 352 may have a size equal to or smaller than that of the second recess 430R2. Accordingly, the second magnet 352 may be inserted into and fixed to the second recess 430R2 and disposed at a set position. The second magnet 352 may be spaced apart from the first magnet 351. In detail, the second magnet 352 may be spaced apart from the first magnet 351 in the first direction (x-axis direction). The second magnet 352 may be disposed facing the first magnet 351 in the first direction. The second magnet 352 may overlap the first magnet 351 in the first direction. For example, the center of the second magnet 352 may overlap the center of the first magnet 351 in the first direction. The second magnet 352 may have a size and shape corresponding to that of the first magnet 351. For example, the second magnet 352 may have the same shape and the same size as the first magnet 351.

The third magnet 353 may be disposed on a third outer surface of the prism unit 400. The third magnet 353 may be disposed in the third recess 430R3 of the prism unit 400. The third magnet 353 may have a size and shape corresponding to that of the third recess 430R3. For example, the third magnet 353 may have the same shape as the third recess 430R3. Also, the third magnet 353 may have a size equal to or smaller than that of the third recess 430R3. Accordingly, the third magnet 353 may be inserted into and fixed to the third recess 430R3 and disposed at a set position. When the third magnet 353 is viewed from the top (z-axis direction), the third magnet 353 may be disposed above the first and second magnets 351 and 352 in the second direction (y-axis direction). For example, one end of the third magnet 353 may be disposed closer to the fifth outer surface of the prism mover 430 than one end of each of the first and second magnets 351 and 352. The center of the third magnet 353 may not be disposed on the same line as the centers of the first magnet 351 and the second magnet 352. In detail, the centers of the first magnet 351 and the second magnet 352 may be disposed on the same line with respect to the first direction (x-axis direction). However, the center of the third magnet 353 may be disposed above an imaginary line connecting the centers of the first and second magnets 351 and 352 in the second direction (y-axis direction). In detail, the center of the third magnet 353 may be closer to the fifth outer surface of the prism mover 430 than the center of the first and second magnets 351 and 352 in the second direction.

Each of the first to third magnets 351, 352, and 353 may have a set size. In detail, the first magnet 351 may extend in the second direction (y-axis direction) and have a first length d1 defined as a length in the second direction. The second magnet 352 may extend in the second direction and have a second length d2 defined as the length in the second direction. In this case, the first length d1 and the second length d2 may be the same. In detail, since the first magnet 351 and the second magnet 352 may have the same shape and size as described above, the lengths in the second direction may be the same. The third magnet 353 may have a shape extending in the first direction (x-axis direction) and the second direction (y-axis direction), and the third magnet 353 may include a third length d4 defined as a length in the first direction (x-axis direction) and a fourth length d4 defined as a length in the second direction (y-axis direction). The third length d3 may be greater than the fourth length d4. The third length d3 may be longer than the length of the prism 410 in the first direction, and the third length d3 may be shorter than the length of the prism mover 430 in the first direction. Also, the third length d3 may be shorter than a distance g1 between the first magnet 351 and the second magnet 352 in the first direction (x-axis direction). For example, the third length d3 may be about 50% to about 98% of the distance g1. In detail, the third length d3 may be about 60% to about 98% of the distance g1. When the third length d3 is less than about 50% of the distance g1, the third magnet 353 is not disposed adjacent to the first magnet 351 and the second magnet 352, so that the leakage flux of the magnet 350 may increase. In this case, the first camera actuator 1000 may cause interference with other actuators or other camera modules disposed adjacent to the first camera actuator 1000, and as a result, the accuracy of the OIS operation of the first camera actuator 1000 may be reduced or the OIS effect may be insignificant. In addition, there is a problem in that the electromagnetic force of the third magnet 353 decreases and power consumption increases.

In addition, when the third length d3 exceeds about 98% of the distance g1, the third magnet 353 may partially overlap the first magnet 351 and the second magnet 352 in the third direction (z-axis direction). Accordingly, leakage magnetic flux of the magnet 350 may increase.

The fourth length d4 may be the same as or different from the first length d1 and the second length d2. For example, the fourth length d4 may be equal to the first length d1 and the second length d2. The third magnet 353 may be disposed on a region corresponding to the first magnet 351 and the second magnet 352 in the first direction (x-axis direction). For example, when the first to third magnets 351, 352, and 353 are viewed from the top (z-axis direction), the third magnet 353 may overlap the first and second magnets 351 and 352 in the first direction. In detail, a part of the third magnet 353 may overlap the first and second magnets 351 and 352. In more detail, the length OL1 of the third magnet 353 overlapping with the first magnet 351 in the second direction may be about to 50% to 98% of the length of the third magnet 353 in the second direction (the fourth length d4). The length OL2 of the third magnet 353 overlapping the second magnet 352 in the second direction may be about to 50% to 98% of the length of the third magnet 353 in the second direction (the fourth length d4). Here, the lengths OL1 and OL2 of the third magnet 353 overlapping the first and second magnets 351 and 352 in the second direction may be equal to each other. In more detail, the lengths OL1 and OL2 of the third magnet 353 in the second direction (y-axis direction) overlapping the first and second magnets 351 and 352 may be about to 60% to 98% of the fourth length d4. When the lengths OL1 and OL2 are less than about 50% of the fourth length d4, the third magnet 353 may not be disposed adjacent to the first magnet 351 and the second magnet 352. That is, the distance in the second direction between an imaginary straight line connecting the centers of the first and second magnets 351 and 352 and the center of the third magnet 353 may increase, so that the effect of reducing leakage flux may be insignificant. In this case, the first camera actuator 1000 may cause interference with other actuators or other camera modules disposed adjacent to the first camera actuator 1000. As a result, the accuracy of the OIS operation of the first camera actuator 1000 may be reduced of the OIS effect may be insignificant. When the lengths OL1 and OL2 exceed about 98% of the fourth length d4, the third magnet 354 is adjacent to the first magnet 351 and the second magnet 352, so that leakage flux may be reduced. However, the third magnet 353 may be disposed adjacent to the prism 410. In this case, since the height of the prism mover 430 in the third direction (z-axis direction) increases so that the third magnet 353 does not interfere with the prism 410, this may cause a problem increasing the size of the prism unit 400. In addition, the thickness of the third magnet 353 may be reduced so that the third magnet 353 does not interfere with the prism 410, but in this case, there is a problem in that the electromagnetic force of the third magnet 353 decreases and power consumption increases. Accordingly, it is preferable that the lengths OL1 and OL2 of the fourth length d4 satisfy the aforementioned range.

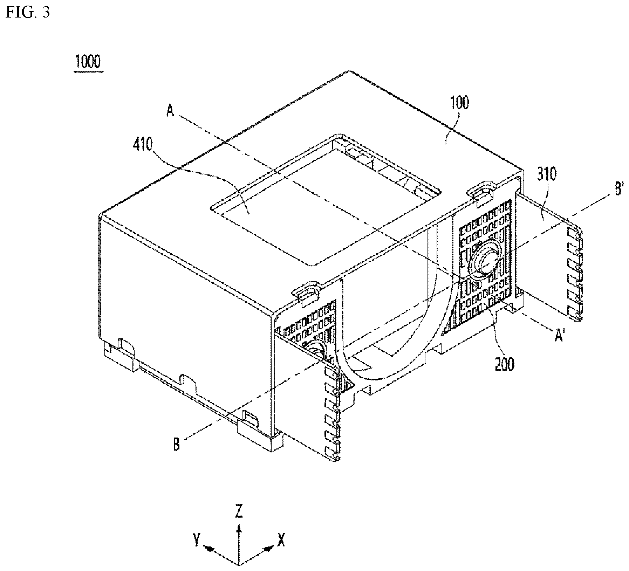

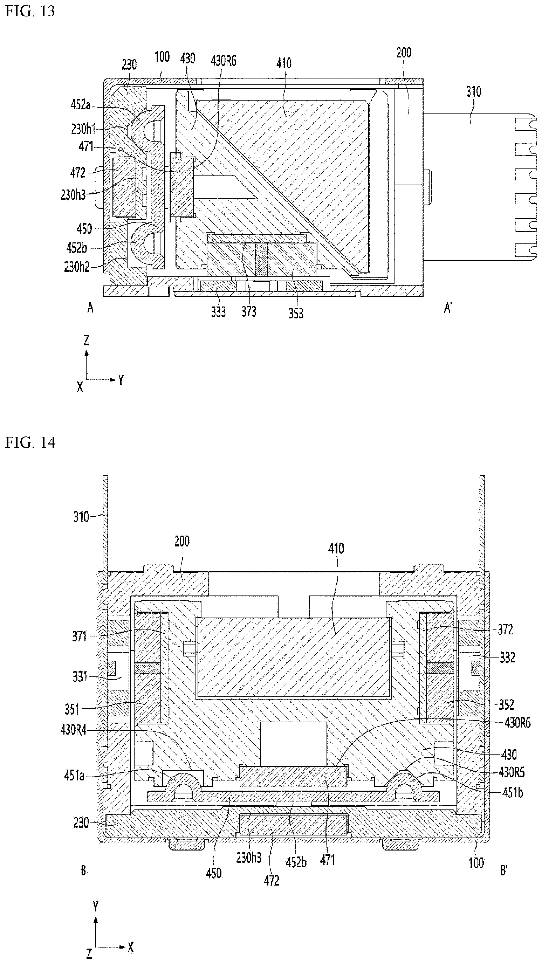

FIG. 13 is a cross-sectional view taken along line A-A' in FIG. 3, and FIG. 14 is a cross-sectional view taken along line B-B' in FIG. 3. Referring to FIGS. 13 and 14, an operation of a first camera actuator according to an embodiment will be described.

The prism unit 400 may be tilted in a first axis or a second axis by the first driving portion 300. Here, the first axis tilting may mean tilting in the z-axis direction (third direction, vertical direction) with the x-axis direction (first direction) shown in the drawing as a rotation axis. The second axis tilting may mean tilting in the x-axis direction (first direction, left-right direction) with the z-axis direction (third direction) shown in the drawing as a rotation axis. The prism unit 400 may be rotational movable about a first imaginary straight line formed in a third direction (z-axis direction) by the third coil portion 333 and the third magnet 353 as an axis. In detail, referring to FIG. 13, attractive and repulsive forces may occur between the third coil portion 333 and the third magnet 353, and the prism unit 400 may be tilted in the first direction (left and right direction) by the attractive and repulsive forces. At this time, the second moving portion 452 may guide the prism unit 400 to tilt in a set direction and a set angle. In addition, the prism unit 400 may provide a stopper function so that the tilt does not exceed the range of angles set by the second moving portion 452. Here, the imaginary first straight line may be a straight line extending in the third direction and may be a straight line connecting the centers of the components 333 and 353.

In the prism unit 400, the first coil portion 331, the second coil portion 332, the first magnet 351, and the second magnet 352 may be provided to be rotatably movable with the virtual second straight line being formed as an axis. In detail, referring to FIG. 14, attractive and repulsive forces may occur between the first coil portion 331 and the first magnet 351, and between the second coil portion 332 and the second magnet 352. In addition, the prism unit 400 may be tilted in a third direction (vertical direction) by attractive and repulsive forces between the respective coil portions 331 and 332 and the respective magnets 351 and 352. At this time, the first moving portion 451 may guide the prism unit 400 to tilt in a set direction and a set angle. In addition, the prism unit 400 may provide a stopper function so that the tilt does not exceed the range of angles set by the first moving portion 451. Here, the imaginary second straight line may be a straight line extending in the first direction and may be a straight line connecting the centers of the components 331, 332, 351, and 352. The first camera actuator 1000 according to the embodiment includes a first driving portion 300 of a voice coil motor (VCM) type. The first camera actuator 1000 may implement an optical image stabilizer (OIS) by controlling the movement path of the light incident by the first driving portion 300 to the first axis and/or the second axis. At this time, the first camera actuator 1000 may have improved optical characteristics by minimizing the occurrence of decentering and tilting phenomena when implementing OIS.

The first driving portion 300 of the first camera actuator 1000 includes a magnet 350, and the magnet 350 is disposed at a set position and may have a set size. Accordingly, the first camera actuator 1000 may minimize or prevent magnetic flux leakage, preventing interference with other actuators or other camera modules disposed adjacent thereto. Accordingly, the first camera actuator 1000 according to the embodiment may prevent the accuracy of the OIS operation from being reduced by the other actuator or the other camera module.

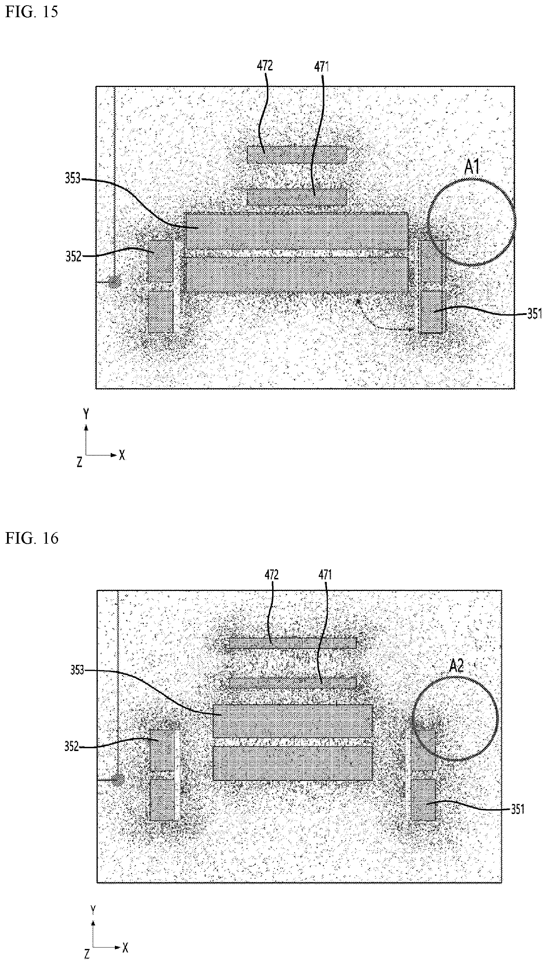

FIGS. 15 and 16 are simulation data of magnetic force distribution of a first camera actuator according to an embodiment and a comparative example. The actions and effects of the invention will be described in more detail through examples and comparative examples below.

### Embodiment

A first camera actuator including a cover member, a first housing, a first driving portion, a prism unit, a first housing holder, and a moving plate was manufactured. In addition, the first driving portion includes first to third magnets. The first magnet was disposed on a first outer surface of the prism mover on which the prism was disposed. A second magnet was disposed on a second outer surface facing the first outer surface in the first direction (x-axis direction). A third magnet is disposed on the bottom surface of the prism unit. At this time, the third magnet was manufactured such that its length in the first direction had 90% or more of the distance between the first and second magnets in the first direction. In addition, the third magnet is disposed at a position where the length of the third magnet overlapping the first and second magnets in the second direction (y-axis direction) is 50% or more of the total length of the third magnet in the second direction. Thereafter, a first camera module was manufactured by connecting the first camera actuator and the second camera actuator, and the magnetic force distribution was measured after arranging the second camera module side by side adjacent to the first camera module.

### Comparative example

A first camera actuator including a cover member, a first housing, a first driving portion, a prism unit, a first housing holder, and a moving plate was manufactured. In addition, the first driving portion includes first to third magnets. The first magnet was disposed on the first outer surface of the prism mover on which the prism was disposed. A second magnet was disposed on a second outer surface facing the first outer surface in the first direction (x-axis direction). A third magnet was disposed on the bottom surface of the prism unit. At this time, the third magnet is manufactured such that the length in the first direction is less than 50% of the distance between the first and second magnets in the first direction. In addition, the third magnet is disposed at a position where the length of the third magnet overlapping the first and second magnets in the second direction (y-axis direction) is 50% or more of the total length of the third magnet in the second direction. Thereafter, a first camera module was manufactured by connecting the first camera actuator and the second camera actuator, and the magnetic force distribution was measured after arranging the second camera module side by side adjacent to the first camera module.

**[Table 1]**

| Distance between first and second camera module (mm) | | Embodiment | | | Comparative Example | | |
|---|---|---|---|---|---|---|---|
| | | Virtual Force (mN) | | | Virtual Force (mN) | | |
| | | X | Y | Z | X | Y | Z |
| Only the first camera module | Result | -0.175 | 0.129 | 0.229 | -0.173 | 0.462 | 0.225 |
| 1.275 mm | Result | -0.188 | -0.423 | 0.287 | -0.302 | -1.708 | 0.363 |
| | Amount of change | -0.013 | -0.552 | 0.058 | -0.129 | -1.246 | 0.139 |
| 2 mm | Result | -0.088 | -0.274 | 0.288 | -0.281 | -1.449 | 0.349 |
| | Amount of change | 0.087 | -0.403 | 0.058 | -0.108 | -0.986 | 0.125 |
| 3 mm | Result | -0.055 | -0.123 | 0.272 | -0.276 | -1.230 | 0.335 |
| | Amount of change | 0.120 | -0.252 | 0.043 | -0.103 | -0.768 | 0.110 |
| 4 mm | Result | -0.053 | -0.037 | 0.267 | -0.253 | -1.047 | 0.287 |
| | Amount of change | 0.122 | -0.166 | 0.038 | -0.080 | -0.585 | 0.062 |
| 5 mm | Result | -0.067 | 0.022 | 0.258 | -0.213 | -0.894 | 0.286 |
| | Amount of change | 0.107 | -0.107 | 0.029 | -0.040 | -0.431 | 0.062 |
| 6 mm | Result | -0.094 | 0.070 | 0.253 | -0.082 | -0.806 | 0.277 |
| | Amount of change | 0.081 | -0.059 | 0.023 | 0.091 | -0.344 | 0.053 |
| 7 mm | Result | -0.100 | 0.093 | 0.264 | -0.089 | -0.730 | 0.252 |
| | Amount of change | 0.075 | -0.096 | 0.035 | 0.084 | -0.268 | 0.027 |
| 8 mm | Result | -0.096 | 0.113 | 0.247 | -0.083 | -0.651 | 0.246 |
| | Amount of change | 0.079 | -0.016 | 0.018 | 0.090 | -0.189 | 0.022 |

Table 1 is an experimental value for the amount of force (mN) applied according to the presence or absence of the second camera module and the distance from the second camera module to the first camera module according to the embodiment and the comparative example. In detail, Table 1 shows experimental values for the magnitude of force applied in the first to third directions (x, y, z-axis directions) when only the first camera module exists. In addition, Table 1 shows experimental values for the magnitude of force applied in the first to third directions (x, y, z-axis directions) when the first camera module and the second camera module are spaced apart at distance of 1.275 mm to 8 mm.

FIGS. 15 and 16, when the second camera module is disposed adjacent to each of the first camera modules according to the embodiment and the comparative example, it may be seen that the leakage magnetic flux region formed around the magnet 350 of the first camera according to the embodiment (A1 in FIG. 15) is lower density than the leakage magnetic flux region formed around the magnet 350 of the first camera module according to the comparative example. Referring to Table 1, when the second camera module is disposed adjacent to the first camera module according to the embodiment, it may be seen that the magnitude of the force applied in each of the first to third directions (x, y, and z-axis directions) varies according to the distance from the second camera module. In detail, it may be seen that the magnitude of the force that changes according to the distance from the second camera module (the amount of change in Table 1) is smaller in the embodiment than in the comparative example.

For example, when the distance between the first and second camera modules is about 2 mm or less and about 6 mm or more, the amount of change in the amount of force applied in the first direction (x-axis direction) is smaller in the embodiment than in the comparative example. In addition, when the distance between the first and second camera modules is about 1.275 mm or more, it may be seen that the amount of change in the amount of force applied in the second direction (y-axis direction) is smaller in the embodiment than in the comparative example. In addition, when the distance between the first and second camera modules is about 1.275 mm to about 8 mm, except for the case of about 7 mm, the amount of change in the magnitude of the force applied in the third direction (z-axis direction) is smaller in the embodiment than in the comparative example. That is, the first camera actuator 1000 of the camera module 10 according to the embodiment may reduce leakage magnetic flux by including the first driving portion 300 including the magnet 350 disposed at a set size and a set position. Accordingly, even if other actuators or other camera modules are arranged side by side in a position adjacent to the camera module 10, magnetic interference by the other actuators or the other camera modules may be minimized. Therefore, the embodiment may provide an OIS function capable of effectively controlling vibration caused by hand shaking using the first camera actuator 1000.

### <Second camera actuator (2000)>

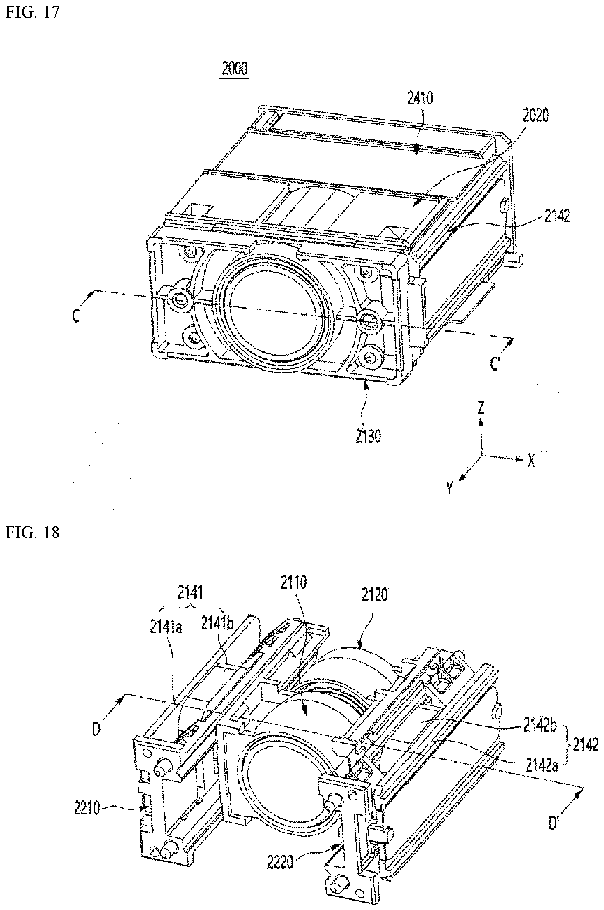

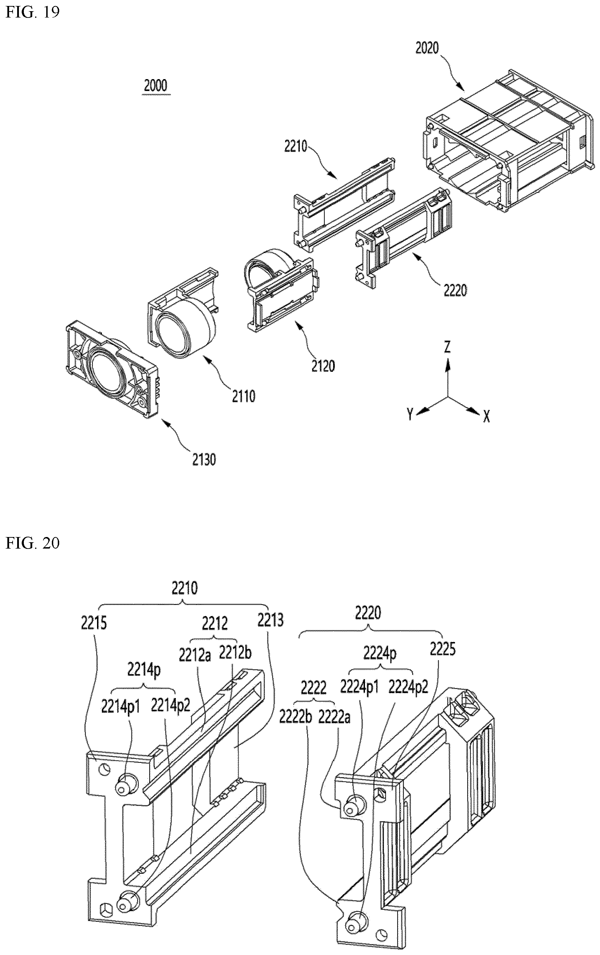

FIG. 17 is a perspective view of a second camera actuator included in a camera module according to an embodiment, and FIG. 18 is a perspective view of the second camera actuator according to an embodiment in which some components are omitted. FIG. 19 is an exploded perspective view in which some components of the second camera actuator according to the embodiment are omitted.

Referring to FIG. 17, the second camera actuator 2000 according to the embodiment may include a base 2020, a circuit board 2410 disposed outside the base 2020, a fourth driving portion 2142, and a third lens assembly 2130. FIG. 18 is a perspective view in which the base 2020 and the circuit board 2410 are omitted in FIG. 17. Referring to FIG. 18, the second camera actuator 2000 according to the embodiment may include a first guide portion 2210, a second guide portion 2220, a first lens assembly 2110, a second lens assembly 2120, a third driving portion 2141 and a fourth driving portion 2142.

The third driving portion 2141 and the fourth driving portion 2142 may include coils or magnets. For example, when the third driving portion 2141 and the fourth driving portion 2142 include coils, the third driving portion 2141 may include the first coil portion 2141b and the third yoke 2141a, and the fourth driving portion 2142 may include a second coil portion 2142b and a fourth yoke 2142a. Alternatively, the third driving portion 2141 and the fourth driving portion 2142 may include magnets.

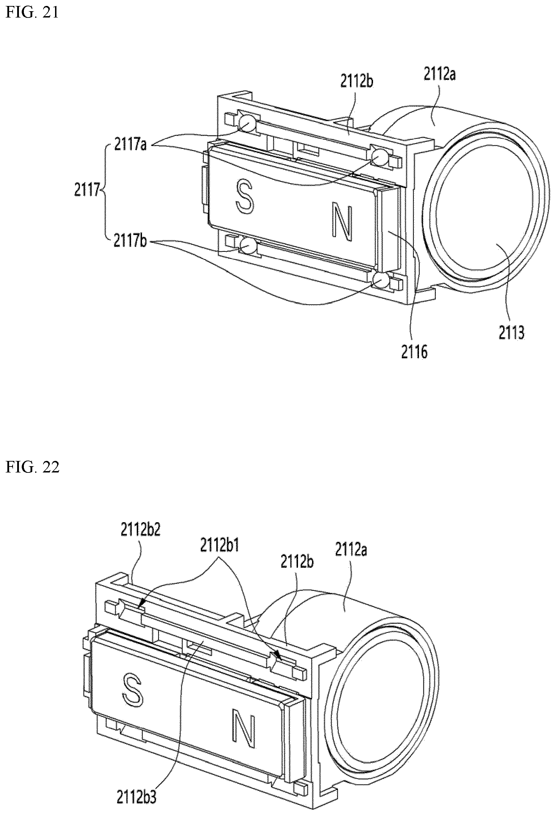

Referring to FIG. 19, the second camera actuator 2000 according to the embodiment may include a base 2020, a first guide portion 2210, a second guide portion 2220, a first lens assembly 2110, a second lens assembly 2120 and a third lens assembly 2130. For example, the second camera actuator 2000 may include a base 2020, a first guide portion 2210 disposed on one side of the base 2020, a second guide portion disposed on the other side of the base 2020, a first lens assembly 2110 corresponding to the first guide portion 2210, a second lens assembly 2120 corresponding to the second guide portion 2220, a first ball bearing 2117 (see FIG. 21) disposed between the first guide par 2210 and the first lens assembly 2110, and a second ball bearing (not shown) disposed between the second guide portion 2220 and the second lens assembly 2120. Also, the second camera actuator 2000 may include a third lens assembly 2130 disposed in front of the first lens assembly 2110 based on an optical axis direction.

Hereinafter, the characteristics of the second camera actuator according to the embodiment will be described in more detail with reference to the drawings.

Referring to FIGS. 18 and 19, the embodiment may include a first guide portion 2210 disposed adjacent to a first sidewall of the base 2020, a second guide portion 2220 disposed adjacent to a second sidewall of the base 2020. The first guide portion 2210 may be disposed between the first lens assembly 2110 and the first sidewall of the base 2020. Also, the second guide portion 2220 may be disposed between the second lens assembly 2120 and the second sidewall of the base 2020. Here, the first sidewall and the second sidewall of the base 2020 may be disposed to face each other.

The first guide portion 2210 and the second guide portion 2220 may not be integrally formed separately from the base 2020. For example, the first guide portion 2210 and the second guide portion 2220 may be injected separately from the base 2020, as a result the first and second guide portions 2210 and 2220 may be injected more precisely, and it is possible to prevent generation of a gradient due to injection. Lengths of the first guide portion 2210 and the second guide portion 2220 in the first direction (x-axis direction) may be shorter than the length of the base part 2020 in the first direction. In addition, lengths of the first guide portion 2210 and the second guide portion 2220 in the second direction (y-axis direction) may be shorter than the length of the base part 2020 in the second direction. Accordingly, when the rails 2212 and 2222 are disposed on each of the first guide portion 2210 and the second guide portion 2220, it is possible to minimize the occurrence of a gradient during injection and prevent the straight line of the rail from being distorted.

FIG. 20 is a perspective view of a first guide portion and a second guide portion in a second camera actuator according to an embodiment.

The first guide portion 2210 and the second guide portion 2220 may guide the first lens assembly 2110 and the second lens assembly 2120. That is, the first lens assembly 2110 and the second lens assembly 2120 may move in the second direction (y-axis direction) along the first and second guide portions 2210 and 2220. Referring to FIG. 20, the first guide portion 2210 may include a single or a plurality of first rails 2212. Also, the second guide portion 2220 may include a single or a plurality of second rails 2222.

The first rail 2212 may be connected from one surface to the other surface of the first guide portion 2210. The first rail 2212 may include a 1-1 rail 2212a and a 1-2 rail 2212b. The 1-1 rail 2212a and the 1-2 rail 2212b may extend in the same direction. For example, the 1-1 rail 2212a and the 1-2 rail 2212b may extend in the second direction (y-axis direction). The first guide portion 2210 may further include a first support portion 2213 and a first guide protruding portion 2215. The first support portion 2213 may be disposed between the 1-1 rail 2212a and the 1-2 rail 2212b. Also, the first guide protruding portion 2215 may extend in a lateral direction perpendicular to a direction in which the first rail 2212 extends. A first protrusion 2214p may be disposed on the first guide protruding portion 2215. For example, the first protrusion 2214p may include a 1-1 protrusion 2214p1 and a 1-2 protrusion 2214p2. The second rail 2222 may be connected from one surface to the other surface of the second guide portion 2220. The second rail 2222 may include a 2-1 rail 2222a and a 2-2 rail 2222b. The 2-1 rail 2222a and the 2-2 rail 2222b may extend in the same direction. For example, the 2-1 rail 2222a and the 2-2 rail 2222b may extend in the second direction (y-axis direction). The second guide portion 2220 may further include a second support portion 2223 and a second guide protruding portion 2225. The second support portion 2223 may be disposed between the 2-1 rail 222a and the 2-2 rail 222b. Also, the second guide protruding portion 2225 may extend in a lateral direction perpendicular to a direction in which the second rail 2222 extends. A second protrusion 2224p may be disposed on the second guide protruding portion 2225. For example, the second protrusion 2224p may include a 2-1 protrusion 2224p1 and a 2-2 protrusion 2224p2. The 1-1 protrusion 2214p1 and 1-2 protrusion 2214p2 of the first guide portion 2210 and the 2-1 protrusion 2224p1 and 2-2 protrusion of the second guide portion 2220 (2224p2) may be coupled to the third housing of the third lens assembly 2130 to be described later.

The embodiment includes a plurality of guide portions 2210 and 2220, and each of the plurality of guide portions 2210 and 2220 may include a plurality of rails. Accordingly, even if one of the rails is damaged, accuracy may be secured with the other one. In addition, since each of the plurality of guide portions 2210 and 2220 includes a plurality of rails, even if there is an issue of frictional force of the balls on any one rail, the balls can be driven by rolling through the other rails, so they may be effectively driven. In addition, as each of the plurality of guide portions 2210 and 2220 includes a plurality of rails, it is possible to effectively control the alignment and spacing of the plurality of lens assemblies 2110 and 2120, and it has effect of the angle of view from changing or out of focus. Accordingly, the embodiment is characterized in that it may have improved image quality and resolution.

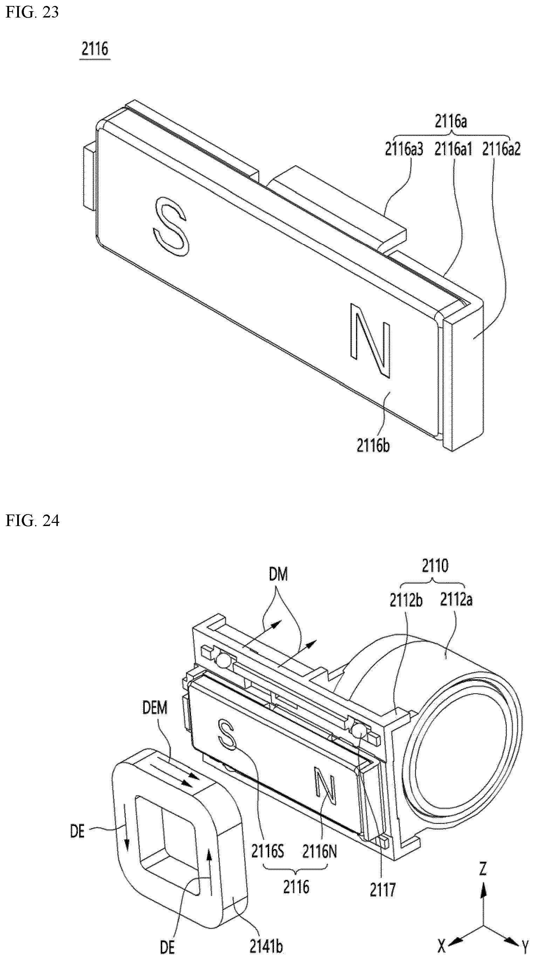

FIGS. 21 and 22 are additional perspective views of the first guide portion shown in FIG. 20, and FIG. 23 is a perspective view of a first driving portion in a second camera actuator according to an embodiment. Also, FIG. 24 is an example of driving in a second camera actuator according to an embodiment.

Referring to FIG. 21, the first lens assembly 2110 may include a first lens barrel 2112a on which a first lens 2113 is disposed, and a first driving portion housing 2112b on which a first driving portion 2116 is disposed. The first lens barrel 2112a and the first driving portion housing 2112b may be defined as a first housing, and the first housing may have a barrel or barrel shape. The first driving portion 2116 may correspond to the first rail 2212. In addition, the first driving portion 2116 may be a magnet driving portion, but is not limited thereto, and a coil may be disposed in some cases. The second lens assembly 2120 may include a second lens barrel (not shown) in which a second lens (not shown) is disposed and a second driving portion housing (not shown) in which a second driving portion (not shown) is disposed. The second lens barrel (not shown) and the second driving portion housing (not shown) may be defined as a second housing, and the second housing may have a barrel or lens barrel shape. The second driving portion may correspond to the second rail 2222. In addition, the second driving portion may be a magnet driving portion, but is not limited thereto, and a coil may be disposed in some cases.

The embodiment may be driven using a single or multiple balls. For example, the embodiment may include a first ball bearing 2117 disposed between the first guide portion 2210 and the first lens assembly 2110 and a second ball bearing (not shown) disposed between the second guide portion 2220 and the second lens assembly 2120. For example, in the embodiment, the first ball bearing 2117 may include single or multiple 1-1 ball bearings 2117a disposed on the upper side of the first driving portion housing 2112b and single or multiple 1-2 ball bearing 2117b disposed on the lower side of the first driving portion 2112b. At this time, among the first ball bearings 2117, the 1-1 ball bearing 2117a moves along the 1-1 rail 2212a, which is one of the first rails 2212, and the 1-2 ball bearings 2117b may move along the 1-2 rails 2212b, which is another one of the first rails 2212.

Referring to FIG. 22, the first lens assembly 2110 may include a first assembly groove 2112b1 in which the first ball bearing 2117 is disposed. The second lens assembly 2120 may include a second assembly groove (not shown) in which the second ball is disposed. The number of first assembly grooves 2112b1 of the first lens assembly 2110 may be plural. In this case, a distance between two first assembly grooves 2112b1 among the plurality of first assembly grooves 2112b1 in the optical axis direction may be greater than a thickness of the first lens barrel 2112a. In an embodiment, the first assembly groove 2112b1 of the first lens assembly 2110 may have a V shape. Also, the second assembly groove (not shown) of the second lens assembly 2120 may have a V shape. The first assembly groove 2112b1 of the first lens assembly 2110 may have a U shape other than a V shape or a shape that contacts the first ball bearing 2117 at two or three points. Also, the second assembly groove (not shown) of the second lens assembly 2120 may have a U shape other than a V shape or a shape that contacts the first ball bearing 2117 at two or three points.

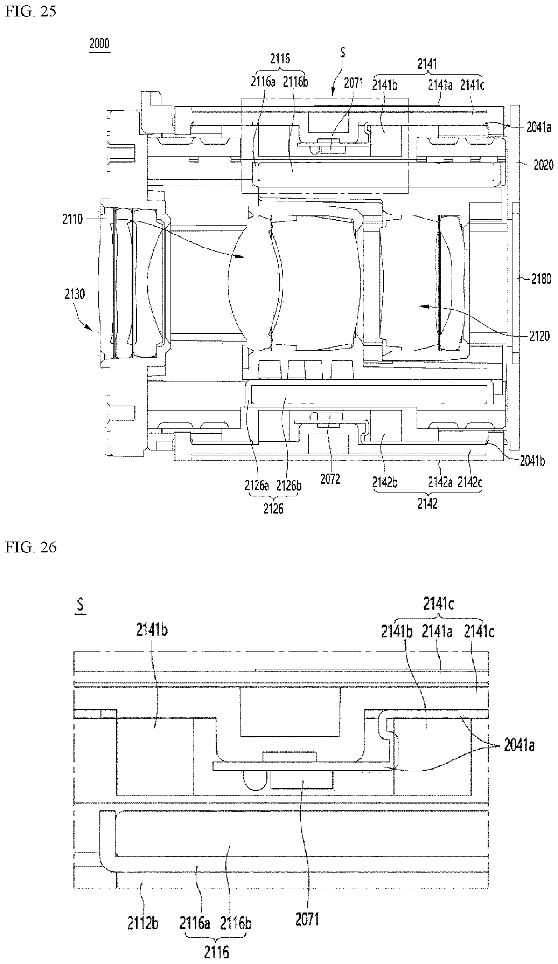

Referring to FIG. 23, the first driving portion 2116 may include a first magnet 2116b and a first yoke 2116a, and the first yoke 2116a includes a first support portion 2116a1 and a first side protruding portion 2116a2. The first side protruding portion 2116a2 may extend from the first support portion 2116a1 to the side of the first magnet 2116b. The first side protruding portion 2116a2 may be disposed on both side surfaces of the first magnet 2116b. The first yoke 2116a may further include a first fixing protrusion 2116a3 extending in a direction different from that of the first side protruding portion 2116a2, for example, in an opposite direction. The first fixing protrusion 2116a3 may be disposed at an intermediate position of the first support portion 2116a1, but is not limited thereto. The second driving portion 2126 may include a second magnet 2126b and a second yoke 2126a, and the second yoke 2126a may include a second support portion (not shown) and a second side protruding portion (not shown) (see the second yoke 2126a in FIG. 25). The second side protruding portion may extend from the second support to the side of the second magnet 2126b. The second side protruding portion may be disposed on both side surfaces of the second magnet 2126b. In addition, the second yoke 2126a may further include a second fixing protrusion (not shown) extending in a direction different from that of the second side protruding portion, for example, in an opposite direction. The second fixing protrusion may be disposed at an intermediate position of the second support, but is not limited thereto.

Referring to FIG. 24, the magnetization method of the magnet in the first driving portion 2116 may be a perpendicular magnetization method. For example, in the embodiment, both the N pole 2116N and the S pole 2116S of the magnet may be magnetized to face the first coil portion 2141b. Accordingly, the N pole 2116N and the S pole 2116S of the magnet may be respectively disposed to correspond to a region in which current flows in the y-axis direction perpendicular to the ground in the first coil portion 2141b. Here, the magnetic force (DM) is applied in the opposite direction to the x-axis from the N pole 2116N of the first driving portion 2116 (the direction of the magnetic force may be a positive or negative direction of the illustrated direction), when current DE flows in the y-axis direction in the first coil portion 2141b region corresponding to the N pole 2116N, electromagnetic force DEM may act in the z-axis direction according to Fleming's left-hand rule. The magnetic force DM is applied in the x-axis direction from the S pole 2116S of the first driving portion 2116, when the current DE flows in the opposite direction of the y-axis perpendicular to the ground in the first coil portion 2141b corresponding to the S pole 2116S, according to Fleming's left hand rule, the electromagnetic force DEM may act in the z-axis direction (the direction of the electromagnetic force may be a positive direction or a negative direction of the illustrated direction). At this time, since the third driving portion 2141 including the first coil portion 2141b is in a fixed state, the first lens assembly 2110, which is a mover in which the first driving portion 2116 is disposed, may move back and forth along the rail of the first guide portion 2210 in a direction parallel to the direction of the z-axis by the electromagnetic force DEM according to the direction of the current. Here, the electromagnetic force DEM may be controlled in proportion to the current DE applied to the first coil portion 2141b. Likewise, electromagnetic force DEM is generated between the second magnet (not shown) and the second coil portion 2142b, so that the second lens assembly 2120 may move along the rail of the second guide portion 2220 horizontally to the optical axis. Accordingly, the second camera actuator 2000 according to the embodiment can prevent or minimize lens decentering or tilting during zooming. Accordingly, it is possible to improve align characteristics between a plurality of lens groups, thereby preventing a change in angle of view or occurrence of out-of-focus, and thus, improved image quality and resolution.

FIG. 25 is a cross-sectional view taken along line C-C' in FIG. 17, and FIGS. 26 and 27 are enlarged views showing an enlarged region S of FIG. 25.

Referring to FIGS. 25 to 27, the second camera actuator 2000 according to the embodiment may include a base 2020 and a lens assembly disposed on the base 2020. For example, a third lens assembly 2130, a first lens assembly 2110, and a second lens assembly 2120 may be sequentially disposed on the base 2020 based on a light incident direction, and an image sensor 2180 may be disposed behind the second lens assembly 2120. As described above, the second camera actuator 2000 may be driven by the electromagnetic force of the magnet and coil portion. For example, in the second camera actuator 2000, the first lens assembly 2110 may include the first driving portion 2116 and the third driving portion 2141, and may be driven by the first driving portion 2116 and the third driving portion 2141. In addition, the second lens assembly 2120 may include the second driving portion 2126 and the fourth driving portion 2142, and may be driven by the second driving portion 2126 and the fourth driving portion 2142.

In the first lens assembly 2110, the first driving portion 2116 may include a first magnet 2116b and a first yoke 2116a, and the third driving portion 2141 may include a first coil portion 2141b and a third yoke 2141a. Also, the third driving portion 2141 may include a first circuit board 2041a between the first coil portion 2141b and the third yoke 2141a. The second camera actuator 2000 according to the embodiment may include a first spacer 2141c and a first position detection sensor 2071 disposed on the base 2020. The first coil portion 2141b and the first position detection sensor 2071 may be electrically connected to the first circuit board 2041a. The first spacer 2141c may be formed of one or more of polycarbonate (PC), polyethylene terephthalate glycol (PETG), polyethylene (PE), or polypropylene (PP), but is not limited thereto.

The first spacer 2141c may include a first support portion 2141c1 and a first protruding portion 2141c3 protruding from the first support portion 2141c1. The first position detection sensor 2071 may be disposed on the first protruding portion 2141c3. The first protruding portion 2141c3 may be disposed in the hollow of the first coil portion 2141b serving as a coil driving portion. The first spacer 2141c may include a first connection portion 2141c2 connecting the first protruding portion 2141c3 and the first support portion 2141c1. In addition, the first circuit board 2041a may include a first substrate region 2041a1 disposed on the first spacer 2141c and a second substrate region 2041a3 disposed spaced apart from the first substrate region 2041a1. The first circuit board 2041a may include a 2-2 substrate region 2041a2 connecting the first substrate region 2041a1 and the second substrate region 2041a3. The second substrate region 2041a3 may be disposed in the hollow of the first coil portion 2141b serving as a coil driving portion.

The first position detection sensor 2071 may be disposed on the first spacer 2141c. The first position detection sensor 2071 may be disposed on the second substrate region 2041a3. The first position detection sensor 2071 may be a magnetic sensor. For example, the first position detection sensor 2071 may be any one of a solid magnetic sensor such as a hall sensor, a coil type magnetic sensor, or a resonance type magnetic sensor, but is not limited thereto. In the second lens assembly 2120, the second driving portion 2126 may include a second magnet 2126b and a second yoke 2126a, and the fourth driving portion 2142 may include a second coil portion 2142b and a fourth yoke 2142a. The fourth driving portion 2142 may include a second circuit board 2041b between the second coil portion 2142b and the fourth yoke 2142a. The second camera actuator 2000 according to the embodiment may include a second spacer 2142c and a second position detection sensor 2072 disposed on the base 2020. The second coil portion 2142b and the second position detection sensor 2072 may be electrically connected to the second circuit board 2041b. The second spacer 2142c may be formed of one or more of polycarbonate (PC), polyethylene terephthalate glycol (PETG), polyethylene (PE), or polypropylene (PP), but is not limited thereto.

The second spacer 2142c may adopt technical characteristics of the first spacer 2141c. For example, the second spacer 2142c may include a second protruding portion (not shown) protruding from a second support portion (not shown). The second position detection sensor 2072 is disposed on the second protrusion. The second protrusion may be disposed in the hollow of the fourth driving portion 2142 that is a coil driving portion. The second spacer 2142c may include a second connection portion (not shown) connecting the second protrusion and the second support portion. In addition, the second circuit board 2041b may include a third substrate region (not shown) disposed on the second spacer 2142c and a fourth substrate region (not shown) disposed apart from the third substrate region. The second circuit board 2041b may include a 4-2 substrate region connecting the third substrate region and the fourth substrate region. The 4-2 substrate region may be disposed in the hollow of the fourth driving portion 2142 that is a coil driving portion. The second position detection sensor 2072 may be disposed on the second spacer 2142c. The second position detection sensor 2072 may be disposed on the 4-2 substrate region. The second position detection sensor 2072 may be a coil type magnetic sensor, a solid magnetic sensor such as a hall sensor, or a resonance type magnetic sensor, but is not limited thereto.

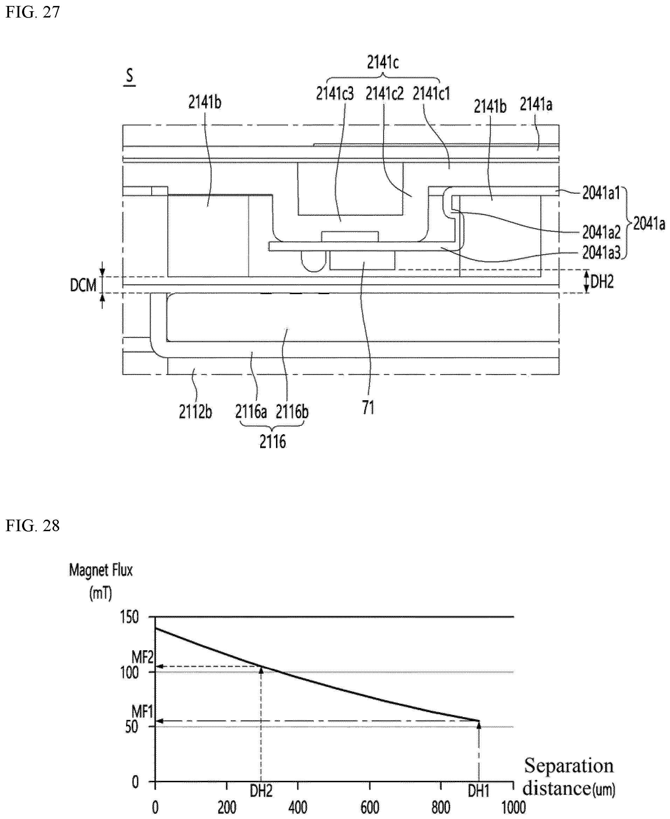

Referring to FIG. 27, the first lens assembly 2110 may be driven in the optical axis direction by electromagnetic force (DEM) between the first magnet 2116b of the first driving portion 2116 and the first coil portion 2141b of the third driving portion 2141. In this case, the electromagnetic force DEM may be affected by a distance DCM between the first magnet 2116b and the first coil portion 2141b. In addition, the magnetic flux of the magnet detected by the position detection sensor changes according to the separation distance between the position detection sensor and the magnet, and thus the position detection performance of the position detection sensor is affected. For example, FIG. 28 is magnetic flux data according to a separation distance between a magnet and a first position detection sensor 2071 in a second camera actuator 2000 according to an embodiment and a comparative example.

In the prior art, there is a problem of securing the height of the coil portion in order to secure the driving force of the lens assembly. For example, in the prior art, as the position detection sensor is disposed on the substrate at the lower end of the coil portion, as the height of the coil portion increases. For this reason, there is a limit to securing the first distance DH1 between the magnet and the position detection sensor at least 800 µm or more. Accordingly, in the prior art (comparative example), the magnetic flux of the magnet detected by the position detection sensor was at a level of securing about 50 mT.

However, in the embodiment, the first spacer 2141c may include a first protruding portion 2141c3 protruding from the first support portion 2141c1, and the first position detection sensor 2071 includes the first protruding portion 2141c3. As it is disposed on the top, the second distance DH2 between the first magnet 2116b and the first position detection sensor 2071 may be remarkably reduced. Accordingly, in the embodiment, the magnetic flux of the first magnet 2116b sensed by the first position detection sensor 2071 may be remarkably improved. In detail, in the embodiment, as the first position detection sensor 2071 is disposed on the first protrusion 2141c3, the second distance DH2 may be secured to about 400 µm or less, about twice as much as short as the prior art (comparative example). In addition, the embodiment may secure a magnetic flux between the first magnet 2116b and the first position detection sensor 2071 of about 150 mT or more, which is about 3 times higher than that of the comparative example. Therefore, the second camera actuator 2000 according to the embodiment may further improve the driving force and simultaneously increase the sensitivity of the position detection sensor, so that it can have more improved characteristics.

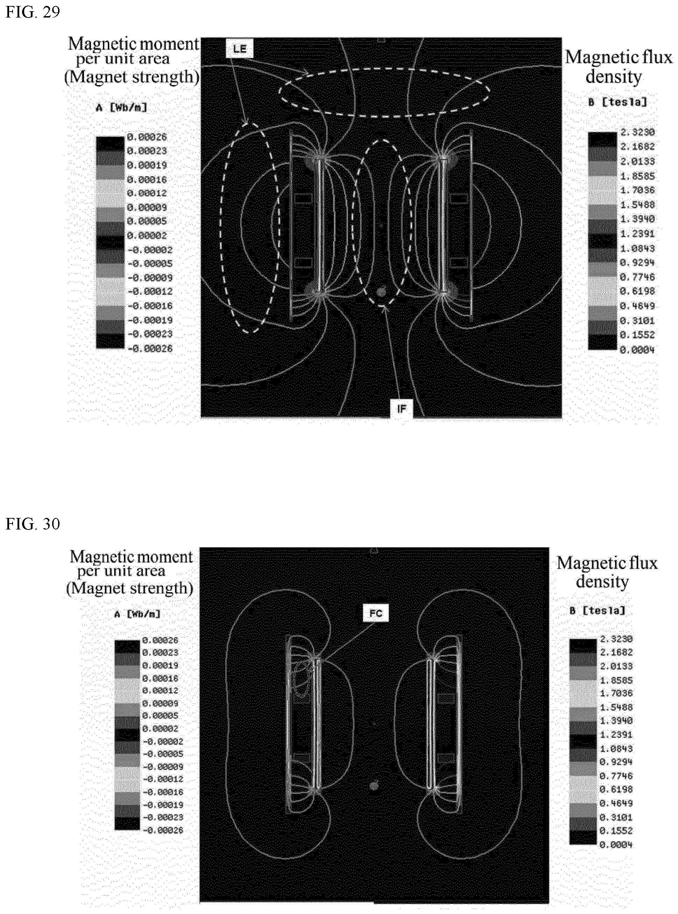

FIGS. 29 and 30 are magnetic flux density distribution data of a second camera actuator according to comparative examples and embodiment.

In the prior art, when implementing an AF or zoom function, a plurality of lens assemblies is driven by electromagnetic force between a magnet and a coil portion, and in this case, there is a problem in that magnetic field interference occurs between magnets mounted on each lens assembly. Due to such magnetic field interference, there is a problem that the accuracy of the AF or zoom function is lowered, the driving force is lowered, and a decent or tilt phenomenon occurs. Due to this problem, in the prior art (comparative example), magnetic flux density distribution data as shown in FIG. 29 could be obtained by arranging a back yoke providing a magnetic flux shielding function adjacent to a magnet. However, although the magnetic flux shielding performance is improved by applying the back yoke to the magnet, since it is magnetic flux density data between magnets mounted on each of the first lens assembly and the second lens assembly, magnetic field interference (IF) between the respective magnets is generated. In addition, there is a problem in that loss of driving force occurs as the magnetic flux generated from each magnet leaks (LE).

However, in an embodiment, the yoke of the driver of the first lens assembly 2110 or the second lens assembly 2120 may include a side protruding portion extending toward a side of the magnet. Accordingly, the embodiment may obtain magnetic flux density distribution data as shown in FIG. 30. That is, the embodiment can prevent magnetic field interference (IF) between magnets by including the side protruding portion, thereby improving the precision of camera control. As the yoke according to the embodiment includes the side protruding portion, leakage of magnetic flux generated from the magnet may be prevented. In addition, as the side protruding portion is disposed on a region of high magnetic flux density, the magnetic flux may be concentrated (FC), thereby increasing the Lorentz Force by increasing the density between the flux line and the coil and improving the driving force.

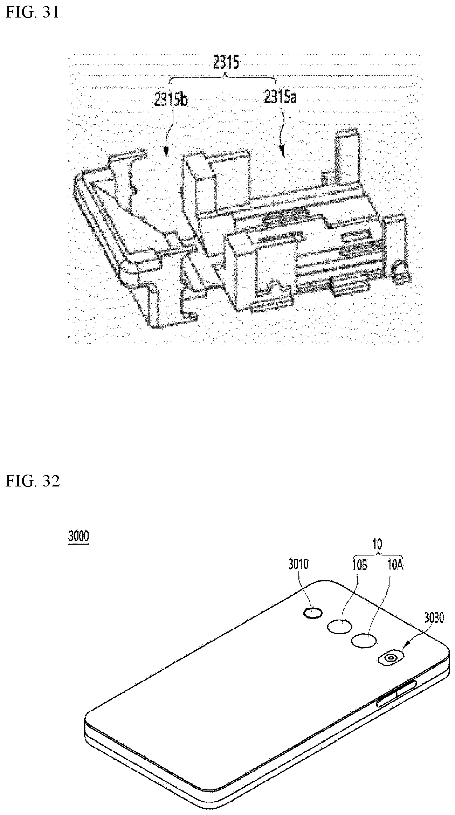

FIG. 31 is an exemplary view of an integrated body in a camera module according to another embodiment.

In a camera module according to another embodiment, the integrated body 2315 may include a first body region 2315a and a second body region 2315b. In this case, the second camera actuator 2000 may be disposed in the first body region 2315a, and the first camera actuator 1000 may be disposed in the second body region 2315b.

FIG. 32 is a perspective view of a mobile terminal to which a camera module according to an embodiment is applied.

Referring to FIG. 32, a mobile terminal 3000 according to an embodiment may include a camera module 10 provided on a rear surface. The camera module 10 may include an image capturing function. In addition, the camera module 10 may include at least one of an autofocus function, a zoom function, and an OIS function. The camera module 10 may process a still image or video frame obtained by an image sensor in a shooting mode or a video call mode. The processed image frame may be displayed on a display unit (not shown) of the mobile terminal 3000 and may be stored in a memory (not shown). In addition, although not shown in the drawing, the camera module may be further disposed on the front side of the mobile terminal 3000. The camera module 10 may include a first camera module 10A and a second camera module 10B. At this time, at least one of the first camera module 10A and the second camera module 10B may include a camera module including the first camera actuator 1000 and the second camera actuator 2000 described above. Accordingly, the camera module may provide an OIS function together with an AF or zoom function. The mobile terminal 3000 may further include an autofocus device 3010. The autofocus device 3010 may include an autofocus function using a laser. The autofocus device 3010 may be mainly used in a condition in which an autofocus function using an image of the camera module 10 is degraded, for example, a proximity of 10 m or less or a dark environment. The autofocus device 3010 may include a light emitting device including a vertical cavity surface emitting laser (VCSEL) semiconductor device and a light receiving unit such as a photodiode that converts light energy into electrical energy.

In addition, the mobile terminal 3000 may further include a flash module 3030. The flash module 3030 may include a light emitting device emitting light therein. The flash module 3030 may be operated by a camera operation of a mobile terminal or a user's control.

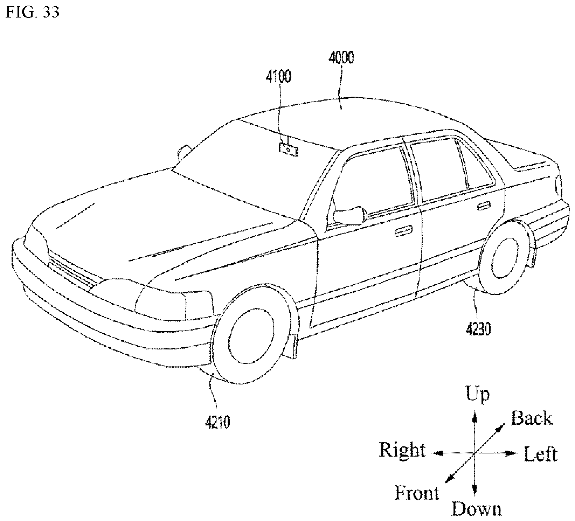

FIG. 33 is a perspective view of a vehicle to which a camera module according to an embodiment is applied. For example, FIG. 33 is an external view of a vehicle equipped with a vehicle driving assistance device to which the camera module 10 according to the embodiment is applied. Referring to FIG. 33, a vehicle 4000 according to an embodiment may include wheels 4210 and 4230 rotating by a power source and a camera module 4100. The camera module 4100 may be disposed toward at least one of the front, rear, side, top, and bottom directions of the vehicle to process a still image or video frame. In this case, the camera module 4100 may include the first camera actuator 1000 and the second camera actuator 2000 described above. Accordingly, the camera module may provide an OIS function together with an AF or zoom function. The camera module 4100 may be disposed in the vehicle 4000 to provide various information. For example, the camera module 4100 may capture a front image or surrounding image of the vehicle 4000 and obtain video information through a camera sensor. The camera module 4100 may use the obtained video information to determine a lane unidentified situation and provide information on a virtual lane when the lane is not identified.

The camera module 4100 may acquire a front image of the vehicle 4000, and a processor (not shown) may provide video information by analyzing an object included in the front image. When the image captured by the camera module 4100 includes objects such as medians, curbs, and street trees corresponding to lanes, adjacent vehicles, driving obstacles, and indirect road markings, the processor detects these objects and may provide video information. At this time, the processor may acquire distance information to the object detected through the camera module 4100 to further supplement video information. The video information may be information about an object photographed in an image.

Features, structures, effects, etc. described in the embodiments above are included in at least one embodiment of the invention, and are not necessarily limited to only one embodiment. Furthermore, the features, structures, and effects illustrated in each embodiment can be combined or modified with respect to other embodiments by those skilled in the art in the field to which the embodiments belong. Therefore, contents related to these combinations and variations should be construed as being included in the scope of the invention.

In addition, although the above has been described with a focus on the embodiments, these are only examples and do not limit the invention, and those skilled in the art to which the invention belongs can exemplify the above to the extent that does not deviate from the essential characteristics of the present embodiment. It will be seen that various variations and applications that have not been made are possible. For example, each component specifically shown in the embodiment can be modified and implemented. And differences related to these modifications and applications should be construed as being included in the scope of the invention as defined in the appended claims.

## Claims

1. A camera actuator comprising:
a first housing;
a prism unit disposed within the first housing; and
a first driving portion for tilting the prism unit in a first axis or a second axis,
wherein the first driving portion includes a first magnet disposed on a region corresponding to a first outer surface of the prism unit; a second magnet disposed on a region corresponding to a second outer surface opposite to the first outer surface of the prism unit; and a third magnet disposed on a region corresponding to a third outer surface disposed between the first and second outer surfaces of the prism unit,
wherein the first and second magnets are spaced apart in a first direction, and
wherein a length of the third magnet in the first direction is in a range of 50% to 98% of a distance between the first and second magnets in the first direction.

2. The camera actuator of claim 1, wherein the first to third magnets extend in a second direction perpendicular to the first direction, and
wherein lengths of the first and second magnets in the second direction are the same.

3. The camera actuator of claim 2, wherein when viewed from top, the third magnet overlaps the first and second magnets in the first direction, and
wherein a length of the third magnet overlapping the first and second magnets in the second direction is in a range of 50% to 98% of a total length of the third magnet in the second direction.

4. The camera actuator of claim 3, wherein a length of the third magnet in the second direction is equal to the lengths of the first and second magnets in the second direction.

5. The camera actuator of claim 2, wherein the length of the third magnet in the first direction is longer than a length of the third magnet in the second direction.

6. The camera actuator of claim 1, comprising: a first housing holder disposed on one side of the first housing; and
a moving plate disposed between the prism unit and the first housing holder,
wherein the moving plate includes a plurality of first moving portions disposed on one surface facing the prism unit; and a plurality of second moving portions disposed on the other surface opposite to the one surface and facing the first housing holder.

7. The camera actuator of claim 6, wherein the first and second moving portions protrude from one surface and the other surface, respectively.

8. The camera actuator of claim 6, wherein the plurality of first moving portions is spaced apart in the first direction, and
wherein the plurality of second moving portions is spaced apart in a third direction perpendicular to the first direction.

9. The camera actuator of claim 7, wherein the prism unit includes a fifth outer surface disposed between the first and second outer surfaces and facing the moving plate, and
wherein the fifth outer surface includes a plurality of recesses disposed on regions corresponding to the plurality of first moving portions.

10. The camera actuator of claim 9, wherein the plurality of first moving portions have a same shape as each other,
wherein the plurality of recesses has different cross-sectional shapes.

11. The camera actuator of claim 8, wherein the prism unit is provided to be tilted in the third direction with an imaginary straight line extending in the first direction as a rotation axis, and
wherein the first moving portion guides the prism unit when the prism unit tilts in the third direction.

12. The camera actuator of claim 11, wherein the prism unit is provided to be tilted in the first direction with an imaginary straight line extending in the third direction as a rotation axis, and
wherein the second moving portion guides the prism unit when the prism unit tilts in the first direction.

13. A camera actuator comprising:
a first housing;
a prism unit disposed within the first housing; and
a first driving portion for tilting the prism unit in a first axis or a second axis,
wherein the first driving portion includes a first magnet disposed on a region corresponding to a first outer surface of the prism unit; a second magnet disposed on a region corresponding to a second outer surface opposite to the first outer surface of the prism unit; and a third magnet disposed on a region corresponding to a third outer surface disposed between the first and second outer surfaces of the prism unit,
wherein the prism unit includes a fifth outer surface disposed between the first and second outer surfaces and connected to the third outer surface,
wherein the first and second magnets are spaced apart in a first direction,
wherein centers of the first and second magnets based on the first direction are arranged on a same line, and
wherein a center of the third magnet based on a second direction perpendicular to the first direction is disposed closer to a fifth outer surface than an imaginary straight line connecting the centers of the first and second magnets.

14. The camera actuator of claim 13, wherein one end of the third magnet is disposed closer to the fifth outer surface than one end of the first and second magnets in the second direction.

15. The camera actuator of claim 14, wherein a length of the third magnet in the first direction is in a range of 50% to 98% of a distance between the first and second magnets in the first direction.

16. A camera module comprising:
a first camera actuator; and
a second camera actuator;
wherein the first camera actuator provides an optical image stabilizer (OIS) function,
wherein the second camera actuator provides a zoom or autofocusing function, and
wherein the first camera actuator is a camera module having the camera actuator according to any one of claims 1 to 15.

17. The camera module of claim 16,
wherein light incident on the camera module from an outside is incident on the second camera actuator through the first camera actuator.
